(19)

Europäisches Patentamt

European Patent Office

Office européen des brevets

(11) **EP 4 632 996 A1**

(12) **EUROPEAN PATENT APPLICATION**
published in accordance with Art. 153(4) EPC

(43) Date of publication:
**15.10.2025 Bulletin 2025/42**

(21) Application number: **24791719.8**

(22) Date of filing: **07.02.2024**

(51) International Patent Classification (IPC):
*H02J 7/00* (2006.01)

(52) Cooperative Patent Classification (CPC):
**H01M 10/44; H02J 7/00;** Y02E 60/10

(86) International application number:
**PCT/CN2024/076725**

(87) International publication number:
**WO 2024/217131 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023 CN 202310424880**

(71) Applicant: **Huawei Technologies Co., Ltd.**
**Shenzhen, Guangdong 518129 (CN)**

(72) Inventors:
• **PENG, Jiang**
  **Shenzhen, Guangdong 518129 (CN)**
• **ZHENG, Liansheng**
  **Shenzhen, Guangdong 518129 (CN)**
• **YANG, Chengjun**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CHARGING CONTROL METHOD, CHARGING APPARATUS AND CHARGING SYSTEM**

(57)     A charging control method, a charging apparatus, and a charging system are provided, and relate to the field of electronic technologies, to increase a charging speed. After a charger establishes a connection to an electronic device according to a first charging protocol, a charging circuit of the electronic device receives, in a first time period under the first charging protocol, a first power signal output by the charger, where the first power signal has a first electrical parameter; and receives, in a second time period under the first charging protocol, a second power signal output by the charger, where the second power signal has a second electrical parameter. The second electrical parameter is greater than the first electrical parameter, and the second time period is after the first time period and is adjacent to the first time period. A difference between the second electrical parameter and the first electrical parameter is n times a minimum adjustment step supported by the charger under the first charging protocol, where n is a positive integer, and n is greater than or equal to 2. Therefore, in a current or voltage rise phase, a current or voltage rise speed can be increased, thereby increasing the charging speed.

FIG. 8

EP 4 632 996 A1

**Description**

This application claims priority to Chinese Patent Application No. 202310424880.4, filed with the China National Intellectual Property Administration on April 19, 2023 and entitled "CHARGING CONTROL METHOD, CHARGING APPARATUS, AND CHARGING SYSTEM", which is incorporated herein by reference in its entirety.

**TECHNICAL FIELD**

Embodiments of this application relate to the field of electronic technologies, and in particular, to a charging control method, a charging apparatus, and a charging system.

**BACKGROUND**

With rapid development of fast charging technologies of terminal devices, maximum charging power has reached more than 200 W. However, in a charging parameter (voltage or current) adjustment process, it usually takes a long time for a current or voltage output by a charger to reach a specified current or voltage. Consequently, a current or voltage rise speed is slow in a current or voltage rise phase, resulting in a slow charging speed.

**SUMMARY**

Embodiments of this application provide a charging control method, a charging apparatus, and a charging system, to increase a current or voltage rise speed in a current or voltage rise phase, thereby increasing a charging speed.

According to a first aspect, a charging control method is provided, applied to an electronic device. The electronic device and a charger form a charging system, and the electronic device includes a charging circuit. The method includes the following steps: After the electronic device establishes a connection to the charger according to a first charging protocol, the charging circuit receives, in a first time period under the first charging protocol, a first power signal output by the charger, where the first power signal has a first electrical parameter; and the charging circuit receives, in a second time period under the first charging protocol, a second power signal output by the charger, where the second power signal has a second electrical parameter. The second electrical parameter is greater than the first electrical parameter, the second time period is after the first time period and is adjacent to the first time period, and a difference between the second electrical parameter and the first electrical parameter is n times a minimum adjustment step of an electrical parameter supported by the charger under the first charging protocol, where n is a positive integer, and n is greater than or equal to 2.

In the foregoing solution, under a fixed charging protocol, after the electronic device establishes a connection to the charger, the charger provides power signals for charging to the charging circuit of the electronic device at different power in any two adjacent time periods. In addition, the electronic device is charged in a first time period of the any two adjacent time periods via the first power signal having the first electrical parameter, and the electronic device is charged in a second time period via the second power signal having the second electrical parameter. The second electrical parameter is greater than the first electrical parameter, and the difference between the second electrical parameter and the first electrical parameter is n times the minimum adjustment step of the electrical parameter supported by the charger under the current charging protocol, where n is a positive integer greater than or equal to 2. Therefore, the electrical parameter of the power signal can be adjusted in an adjustment manner in which an actual adjustment step is greater than the minimum adjustment step of the electrical parameter supported by the charging protocol. Therefore, a charging voltage or a charging current can quickly rise to a target value, thereby increasing a charging speed.

In a possible implementation, the method further includes: The charging circuit receives, in a third time period under the first charging protocol, a third power signal output by the charger, where the third power signal has a third electrical parameter. The third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, where m is an integer. A value relationship between m and n is not limited in embodiments of this application. To be specific, adjustment values for two times of adjustment of the power signal may be the same or different based on an actual situation, and may gradually increase or decrease.

In a possible implementation, the electronic device further includes a processing circuit. The method further includes: The processing circuit sends a first control instruction to the charger in a previous time period of the first time period, where the first control instruction includes the first electrical parameter, or the first control instruction includes an electrical parameter of a power signal output by the charger in the previous time period of the first time period. That the charging circuit receives, in a first time period, a first power signal output by the charger includes: The charging circuit receives, in the first time period, the first power signal sent by the charger in response to the first control instruction. Specifically, the electrical parameter of the first power signal may be determined through negotiation in a previous time period of the first time period according to the first control instruction transmitted by the electronic device to the charger.

In a possible implementation, the electronic device further includes a processing circuit. The method further includes: The processing circuit sends a second control instruction to the charger in the first time period, where the second control instruction includes the second electrical parameter, or the second control instruction includes the first electrical parameter. That the charging circuit receives, in a second time period, a second power signal output by the charger includes: The charging circuit receives, in the second time period, the second power signal sent by the charger in response to the second control instruction. Specifically, the second power signal may be determined through negotiation in the first time period before the second time period according to the second control instruction transmitted by the electronic device to the charger.

In a possible implementation, before the processing circuit sends the second control instruction to the charger in the first time period, the method further includes: The processing circuit detects the first power signal to obtain the first electrical parameter, where the first electrical parameter includes a current or a voltage; and the processing circuit determines the second electrical parameter based on a difference between the first electrical parameter and the target value, where the target value is a target charging voltage or a target charging current negotiated by the electronic device and the charger. The second electrical parameter of the second power signal transmitted in the second time period may be determined by the electronic device based on the difference between the first electrical parameter of the first power signal transmitted in the first time period and the target value. The target value may be usually a maximum value of a charging current or a charging voltage obtained through negotiation, that is, the target charging voltage or the target charging current.

In a possible implementation, that the processing circuit determines the second electrical parameter based on a difference between the first electrical parameter and the target value includes: The processing circuit determines an adjustment value based on the difference between the first electrical parameter and the target value and a relationship table, where the relationship table includes a correspondence between the difference and the adjustment value; and the processing circuit determines the second electrical parameter based on the first electrical parameter and the adjustment value. For example, in this table, a larger difference between the first electrical parameter and the target value indicates a larger corresponding adjustment value. In this way, an adjustment speed of the electrical parameter of the power signal can be increased, to increase a current or voltage rise speed, thereby increasing the charging speed.

In a possible implementation, that the processing circuit determines the second electrical parameter based on a difference between the first electrical parameter and the target value includes: The processing circuit rounds a predetermined proportion of the difference between the first electrical parameter and the target value as an adjustment value; and the processing circuit determines the second electrical parameter based on the first electrical parameter and the adjustment value. In this example, the first electrical parameter may be adjusted to a large extent at a time based on the predetermined proportion of the difference, to shorten time of a current or voltage rise phase. For example, in consideration of device safety, a specific margin may be set for an increment of the first electrical parameter (the charging voltage), to be specific, the first electrical parameter (the charging voltage) may be adjusted based on the adjustment value determined based on the predetermined proportion of the difference between the target value (the target charging voltage) and the first electrical parameter.

In a possible implementation, that the processing circuit determines the second electrical parameter based on a difference between the first electrical parameter and the target value includes: The processing circuit rounds a half of the difference between the first electrical parameter and the target value as an adjustment value; and the processing circuit determines the second electrical parameter based on the first electrical parameter and the adjustment value. That is, the first electrical parameter is adjusted according to a dichotomy. For example, the first electrical parameter (for example, the charging voltage/current) is increased according to the dichotomy, and a voltage/current increased each time is half of a difference (|current charging current-target charging current|) between a current charging voltage/current and the target charging voltage/current. In this way, when the difference between the current charging voltage/current and the target charging voltage/current is large, time of a current or voltage rise phase can be quickly shortened.

In a possible implementation, the electronic device further includes the processing circuit and a protection circuit. The protection circuit is configured to connect to the charger, the charging circuit is connected between the protection circuit and a battery, and the processing circuit is connected to the protection circuit and the charging circuit. The method further includes: The processing circuit sends a third control instruction to the protection circuit in the first time period; and the protection circuit increases a protection threshold of the electrical parameter according to the third control instruction, where the protection threshold is greater than the target charging voltage or the target charging current negotiated by the electronic device and the charger, and the protection circuit is open when the electrical parameter is greater than the protection threshold. Generally, the protection circuit is disposed in the electronic device, and the charging circuit is connected between the protection circuit and the battery. Specifically, the charging circuit receives, through the protection circuit, the first power signal and the second power signal that are output by the charger, to charge the battery. The protection threshold is set for the protection circuit. The protection circuit is open when the electrical parameter of the first power signal or the second power signal is greater than the protection threshold, to ensure system safety. In a process of adjusting the power signal output by the charger, to avoid triggering the protection threshold, a common practice is to gradually increase the electrical parameter of the power signal based on the minimum adjustment step in each adjustment process. However, in this embodiment of this application, the difference between the second electrical parameter and the first electrical parameter is n times the minimum adjustment step of the electrical parameter supported by the charger under the first charging protocol. Therefore, when n is large, the electrical parameter changes greatly, and there is a risk that charging is interrupted because the protection circuit is triggered to be open. Therefore, in this embodiment of this application, the processing circuit may further send the third control instruction to the protection circuit in the first time period, to control the protection circuit to increase the protection threshold of the electrical parameter, and set the protection threshold to be greater than the target charging voltage or the target charging current negotiated by the electronic device and the charger. For example, a protection threshold for overvoltage protection is increased from 150% of the target charging voltage to 180% of the target charging voltage, and a protection threshold for overcurrent protection is increased from 6 A (the target charging current) to 8 A. Therefore, a case in which the protection circuit is triggered to be open because the electrical parameter of the power signal output by the charger is adjusted at a time by n times the minimum adjustment step is avoided.

In a possible implementation, the electronic device further includes the processing circuit, the charging circuit is coupled to the charger, the charging circuit is further connected to a battery, and the processing circuit is connected to the charging circuit. The method further includes: The processing circuit sends a fourth control instruction to the charging circuit in the first time period; and the charging circuit increases link impedance between the charger and the battery in response to the fourth control instruction. Generally, a protection circuit is disposed in the electronic device, and the charging circuit is connected between the protection circuit and the battery. Specifically, the charging circuit receives, through the protection circuit, the first power signal and the second power signal that are output by the charger, to charge the battery. A protection threshold is set for the protection circuit. The protection circuit is open when the electrical parameter of the first power signal or the second power signal is greater than the protection threshold, to ensure system safety. In this embodiment of this application, the difference between the second electrical parameter and the first electrical parameter is n times the minimum adjustment step of the electrical parameter supported by the charger in the first charging protocol. Therefore, when n is large, the electrical parameter changes greatly, and there is a risk that charging is interrupted because the protection circuit is triggered to be open. Therefore, in this embodiment of this application, the processing circuit may send the fourth control instruction to the charging circuit in the first time period, to control the charging circuit to increase the link impedance between the charger and the battery. In this way, when an output voltage of the charger is fixed, increasing the link impedance can effectively reduce the charging current, and avoid a case in which the protection circuit is triggered to be open because the current is overcharged and reaches the protection threshold.

In a possible implementation, the charging circuit includes a control circuit, and a switch and a power conversion circuit that are connected in series between the charger and the battery. The control circuit is connected to the switch, the power conversion circuit, and the processing circuit. The control circuit controls, in response to the fourth control instruction, the switch to change to a low dropout regulator (low dropout regulator, LDO) mode. In this example, the charging circuit may use an LDO, and the LDO includes a switch connected in series to a charging link. The link impedance may be increased by controlling the switch in the charging link to change from a fully open mode to the LDO mode. In the LDO mode, impedance of the switch may be increased from several milliohms to hundreds of milliohms.

According to a second aspect, a charging control method is provided. The method is applied to a charger, the charger and an electronic device form a charging system, and the charger includes a power conversion circuit. The method includes: After the charger establishes a connection to the electronic device according to a first charging protocol, the power conversion circuit outputs a first power signal to the electronic device in a first time period under the first charging protocol, where the first power signal has a first electrical parameter; and the power conversion circuit outputs a second power signal to the electronic device in a second time period under the first charging protocol, where the second power signal has a second electrical parameter. The second electrical parameter is greater than the first electrical parameter, the second time period is after the first time period and is adjacent to the first time period, and a difference between the second electrical parameter and the first electrical parameter is n times a minimum adjustment step supported by the charger under the first charging protocol, where n is a positive integer, and n is greater than or equal to 2.

In a possible implementation, the method further includes: The power conversion circuit outputs a third power signal to the electronic device in a third time period under the first charging protocol, where the third power signal has a third electrical parameter. The third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, where m is an integer.

In a possible implementation, the charger further includes a processing circuit. The method further includes: The processing circuit receives, in a previous time period of the first time period, a first control instruction sent by the electronic device, where the first control instruction includes the first electrical parameter, or the first control instruction includes an electrical parameter of a power signal output by the charger in the previous time period of the first time period. That the power conversion circuit outputs a first power signal to the electronic device in the first time period includes: The power conversion circuit sends the first power signal to the electronic device in the first time period in response to the first control instruction.

In a possible implementation, the charger further includes the processing circuit. The method further includes: The processing circuit receives, in the first time period, a second control instruction sent by the electronic device, where the second control instruction includes the second electrical parameter, or the second control instruction includes the first electrical parameter in the first time period. That the power conversion circuit outputs a second power signal to the electronic device in the second time period includes: The power conversion circuit sends the second power signal to the second electronic device in the second time period in response to the second control instruction.

In a possible implementation, after the processing circuit receives, in the first time period, the second control instruction sent by the electronic device, the method further includes: The processing circuit determines the second electrical parameter based on a difference between the first electrical parameter and a target value, where the target value is a target charging voltage or a target charging current negotiated by the electronic device and the charger.

In a possible implementation, that the processing circuit determines the second electrical parameter based on a difference between the first electrical parameter and a target value includes: The processing circuit determines an adjustment value based on the difference between the first electrical parameter and the target value and a relationship table, where the relationship table includes a correspondence between the difference and the adjustment value; and the processing circuit determines the second electrical parameter based on the first electrical parameter and the adjustment value.

In a possible implementation, that the processing circuit determines the second electrical parameter based on a difference between the first electrical parameter and a target value includes: The processing circuit rounds a predetermined proportion of the difference between the first electrical parameter and the target value as an adjustment value; and the processing circuit determines the second electrical parameter based on the first electrical parameter and the adjustment value.

In a possible implementation, that the processing circuit determines the second electrical parameter based on a difference between the first electrical parameter and a target value includes: The processing circuit rounds a half of the difference between the first electrical parameter and the target value as an adjustment value; and the processing circuit determines the second electrical parameter based on the first electrical parameter and the adjustment value.

According to a third aspect, a charging apparatus is provided. The charging apparatus is used in an electronic device, and may be the electronic device or a chip or a chip system disposed in the electronic device. The charging apparatus includes a processing circuit and a charging circuit. The processing circuit is configured to establish a connection to a charger according to a first charging protocol. The charging circuit is configured to: receive, in a first time period under the first charging protocol, a first power signal output by the charger, where the first power signal has a first electrical parameter; and receive, in a second time period under the first charging protocol, a second power signal output by the charger, where the second power signal has a second electrical parameter. The second electrical parameter is greater than the first electrical parameter, the second time period is after the first time period and is adjacent to the first time period, and a difference between the second electrical parameter and the first electrical parameter is n times a minimum adjustment step supported by the charger under the first charging protocol, where n is a positive integer, and n is greater than or equal to 2.

In a possible implementation, the charging circuit is further configured to receive, in a third time period under the first charging protocol, a third power signal output by the charger, where the third power signal has a third electrical parameter. The third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, where m is an integer.

In a possible implementation, the processing circuit is further configured to send a first control instruction to the charger in a previous time period of the first time period, where the first control instruction includes the first electrical parameter, or the first control instruction includes an electrical parameter of a power signal output by the charger in the previous time period of the first time period. The charging circuit is specifically configured to receive, in the first time period, the first power signal sent by the charger in response to the first control instruction.

In a possible implementation, the processing circuit is further configured to send a second control instruction to the charger in the first time period, where the second control instruction includes the second electrical parameter, or the second control instruction includes the first electrical parameter in the first time period. The charging circuit is specifically configured to receive, in the second time period, the second power signal sent by the charger in response to the second control instruction.

In a possible implementation, the processing circuit is further configured to: detect the first power signal to obtain the first electrical parameter, where the first electrical parameter includes a current or a voltage; and determine the second electrical parameter based on a difference between the first electrical parameter and a target value, where the target value is a target charging voltage or a target charging current negotiated by the electronic device and the charger.

In a possible implementation, the processing circuit is specifically configured to: determine an adjustment value based on the difference between the first electrical parameter and the target value and a relationship table, where the relationship table includes a correspondence between the difference and the adjustment value; and determine the second electrical parameter based on the first electrical parameter and the adjustment value.

In a possible implementation, the processing circuit is specifically configured to: round a predetermined proportion of the difference between the first electrical parameter and the target value as an adjustment value; and determine the second electrical parameter based on the first electrical parameter and the adjustment value.

In a possible implementation, the processing circuit is specifically configured to: round a half of the difference between the first electrical parameter and the target value as an adjustment value; and determine the second electrical parameter based on the first electrical parameter and the adjustment value.

In a possible implementation, the electronic device further includes the processing circuit and a protection circuit. The protection circuit is connected to the charger, the charging circuit is connected between the protection circuit and a battery, and the processing circuit is connected to the protection circuit and the charging circuit. The processing circuit is configured to send a third control instruction to the protection circuit in the first time period. The protection circuit is configured to increase a protection threshold of the electrical parameter according to the third control instruction, where the protection threshold is greater than the target charging voltage or the target charging current negotiated by the electronic device and the charger, and the protection circuit is open when the electrical parameter is greater than the protection threshold.

In a possible implementation, the electronic device further includes the processing circuit. The charging circuit is coupled to the charger, and the charging circuit is further connected to a battery. The processing circuit is connected to the charging circuit. In the first time period, the processing circuit is configured to send a fourth control instruction to the charging circuit. The charging circuit increases link impedance between the charger and the battery in response to the fourth control instruction.

In a possible implementation, the charging circuit is configured to change to an LDO mode in response to the fourth control instruction.

According to a fourth aspect, a charging apparatus is provided. The charging apparatus is used in a charger, and may be the charger or a chip or a chip system applied to charging. The charging apparatus includes a processing circuit and a power conversion circuit. The processing circuit is configured to establish a connection to an electronic device according to a first charging protocol. The power conversion circuit is configured to: output a first power signal to the electronic device in a first time period under the first charging protocol, where the first power signal has a first electrical parameter; and output a second power signal to the electronic device in a second time period under the first charging protocol, where the second power signal has a second electrical parameter. The second electrical parameter is greater than the first electrical parameter, the second time period is after the first time period and is adjacent to the first time period, and a difference between the second electrical parameter and the first electrical parameter is n times a minimum adjustment step supported by the charger under the first charging protocol, where n is a positive integer, and n is greater than or equal to 2.

In a possible implementation, the power conversion circuit is further configured to output a third power signal to the electronic device in a third time period under the first charging protocol, where the third power signal has a third electrical parameter. The third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, where m is an integer.

In a possible implementation, the processing circuit is further configured to receive, in a previous time period of the first time period, a first control instruction sent by the electronic device, where the first control instruction includes the first electrical parameter, or the first control instruction includes an electrical parameter of a power signal output by the charger in the previous time period of the first time period. The power conversion circuit is specifically configured to send the first power signal to the electronic device in the first time period in response to the first control instruction.

In a possible implementation, the processing circuit is further configured to receive, in the first time period, a second control instruction sent by the electronic device, where the second control instruction includes the second electrical parameter, or the second control instruction includes the first electrical parameter in the first time period. The power conversion circuit is specifically configured to send the second power signal to the second electronic device in the second time period in response to the second control instruction.

In a possible implementation, the processing circuit is specifically configured to determine the second electrical parameter based on a difference between the first electrical parameter and a target value, where the target value is a target charging voltage or a target charging current negotiated by the electronic device and the charger.

In a possible implementation, the processing circuit is specifically configured to: determine an adjustment value based on the difference between the first electrical parameter and the target value and a relationship table, where the relationship table includes a correspondence between the difference and the adjustment value; and determine the second electrical parameter based on the first electrical parameter and the adjustment value.

In a possible implementation, the processing circuit is specifically configured to: round a predetermined proportion of the difference between the first electrical parameter and the target value as an adjustment value; and determine the second electrical parameter based on the first electrical parameter and the adjustment value.

In a possible implementation, the processing circuit is specifically configured to: round a half of the difference between the first electrical parameter and the target value as an adjustment value; and determine the second electrical parameter based on the first electrical parameter and the adjustment value.

According to a fifth aspect, a chip is provided, including the charging apparatus according to the third aspect or the fourth aspect and the possible implementations of the third aspect or the fourth aspect.

According to a sixth aspect, a charging system is provided, including an electronic device and a charger. The electronic device includes the charging apparatus according to the third aspect and the possible implementations of the third aspect.

According to a seventh aspect, a charging system is provided, including an electronic device and a charger. The charger includes the charging apparatus according to the fourth aspect and the possible implementations of the fourth aspect.

For technical problems resolved in the second aspect to the seventh aspect and the possible implementations of the second aspect to the seventh aspect and implemented technical effects thereof, refer to the descriptions in the first aspect and the possible implementations of the first aspect. Details are not described again.

## BRIEF DESCRIPTION OF DRAWINGS

FIG. 1 is a diagram of a structure of a charging system according to an embodiment of this application;
FIG. 2 is a diagram of a structure of an electronic device according to an embodiment of this application;
FIG. 3 is a diagram of a structure of an interface according to an embodiment of this application;
FIG. 4 is a diagram of a structure of an electronic device according to another embodiment of this application;
FIG. 5 is a diagram of a structure of an electronic device according to still another embodiment of this application;
FIG. 6 is a diagram of a charging voltage adjustment manner according to an embodiment of this application;
FIG. 7 is a diagram of a charging current adjustment manner according to an embodiment of this application;
FIG. 8 is a schematic flowchart of a charging control method according to an embodiment of this application;
FIG. 9 is a diagram of an equivalent circuit of a charging system according to an embodiment of this application;
FIG. 10 is a diagram of a change process of a charging voltage and a charging current according to an embodiment of this application;
FIG. 11 is a diagram of a change process of a charging voltage and a charging current according to another embodiment of this application;
FIG. 12 is a diagram of a change process of a charging voltage and a charging current according to still another embodiment of this application;
FIG. 13 is a diagram of a change process of a charging voltage and a charging current according to yet another embodiment of this application;
FIG. 14 is a diagram of a change process of a charging voltage and a charging current according to still yet another embodiment of this application;
FIG. 15 is a diagram of a change process of a charging voltage and a charging current according to a further embodiment of this application;
FIG. 16 is a diagram of a change process of a charging current according to another embodiment of this application;
FIG. 17 is a diagram of a change process of a charging current according to still another embodiment of this application;
FIG. 18 is a diagram of a structure of an electronic device according to yet another embodiment of this application;
FIG. 19 is a diagram of a structure of an electronic device according to still yet another embodiment of this application; and
FIG. 20 is a diagram of a structure of a charging apparatus according to an embodiment of this application.

## DESCRIPTION OF EMBODIMENTS

Technical solutions in some embodiments of this application are clearly and completely described below with reference to accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two. Unless otherwise expressly specified and limited, the term "connection" should be understood in a broad sense. For example, the "connection" may be a fixed connection, a detachable connection, or an integrated connection, or may be a direct connection or an indirect connection implemented through an intermediate medium. When being used to describe a threeport switch (which is also referred to as a switching device, for example, a switch transistor or a switching transistor), a "first end" and a "second end" may be connection ends of the switch, and a "control end" may be a control end of the switch. For example, for a metal-oxide-semiconductor field-effect transistor (metal-oxide-semiconductor field-effect transistor, MOSFET), the control end may be a gate (gate, g) of the MOS transistor, the first end may be a source (source, s) of the MOS transistor, and the second end may be a drain (drain, d) of the MOS transistor; or the first end may be a drain of the MOS transistor, and the second end may be a source of the MOS transistor. In embodiments of this application, each switch may include one MOSFET. However, to minimize an increase in internal resistance caused by a switch connected in series on a line, each switch may alternatively include two or more MOSFETs connected in parallel.

The following describes the technical solutions of this application with reference to the accompanying drawings.

A switching power supply circuit and a switching power supply provided in embodiments of this application may be used in an electronic device like a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device, or a charger of the foregoing electronic device.

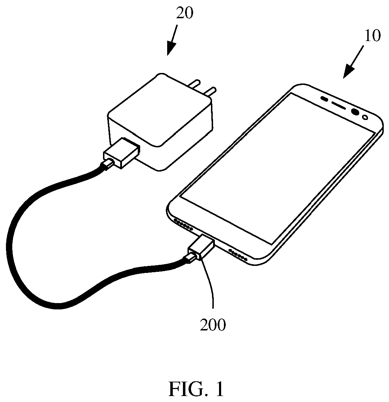

With reference to FIG. 1, an embodiment of this application provides a charging system including an electronic device 10 and a charger 20. Generally, the charger 20 includes a housing and a power conversion circuit installed in the housing. An input side of the power conversion circuit is usually connected to a mains (for example, may be a 220 V alternating current mains) through pins disposed on the housing, and an output side of the power conversion circuit is connected to the electronic device 10 through a plug 200. In addition, the power conversion circuit may be usually soldered to a printed circuit board PCB in the housing. In some examples, the charger 20 is also referred to as a power adapter. Generally, in some typical applications, the power conversion circuit may be a switch circuit.

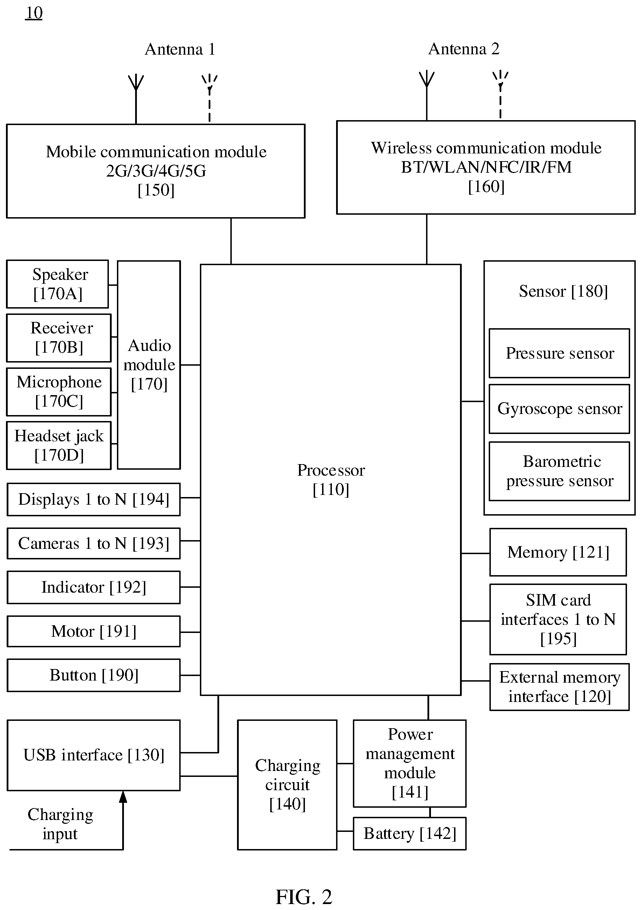

For example, FIG. 2 is a diagram of a structure of the electronic device 10.

As shown in FIG. 2, the electronic device 10 may include a processor 110, an external memory interface 120, a memory 121, a universal serial bus (universal serial bus, USB) interface 130, a charging circuit 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

It may be understood that the structure shown in this embodiment does not constitute a specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

The processor 110 may include one or more processing units.

For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the electronic device 10 may alternatively include one or more processors 110. The processor 110 may be a nerve center and a command center of the electronic device 10. The processor 110 may generate an operation control signal based on instruction operation code and a time sequence signal, to complete control of instruction fetching and instruction execution.

A memory may be further disposed in the processor 110, and is configured to store instructions and data.

In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, so that system efficiency of the electronic device 10 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to the power adapter 20 to charge the electronic device 10, or may be configured to transmit data between the electronic device 10 and a peripheral device, or may be configured to connect to a headset for playing audio through the headset.

It may be understood that an interface connection relationship between the modules that is shown in this embodiment of the present invention is merely an example for description, and constitutes no limitation on the structure of the electronic device 10. In some other embodiments of this application, the electronic device 10 may alternatively use an interface connection manner different from that in the foregoing embodiment, or a combination of a plurality of interface connection manners.

The charging circuit 140 is configured to receive a charging input from the charger. When charging the battery 142, the charging circuit 140 may further supply power to the electronic device 10 through the power management module 141.

In some embodiments, the charging circuit 140 may receive the charging input (for example, a charging current or a charging voltage) of the charger through the USB interface 130.

The power management module 141 is configured to connect to the battery 142, the charging circuit 140, and the processor 110. The power management module 141 receives an input from the battery 142 and/or the charging circuit 140, and supplies power to the processor 110, the memory 121, the display 194, the camera 193, the wireless communication module 160, and the like. The power management module 141 may be further configured to monitor parameters such as a battery capacity, a battery cycle count, and a battery health status (electric leakage or impedance).

In some embodiments, the power management module 141 may alternatively be disposed in the processor 110. In some other embodiments, the power management module 141 and the charging circuit 140 may alternatively be disposed in a same device.

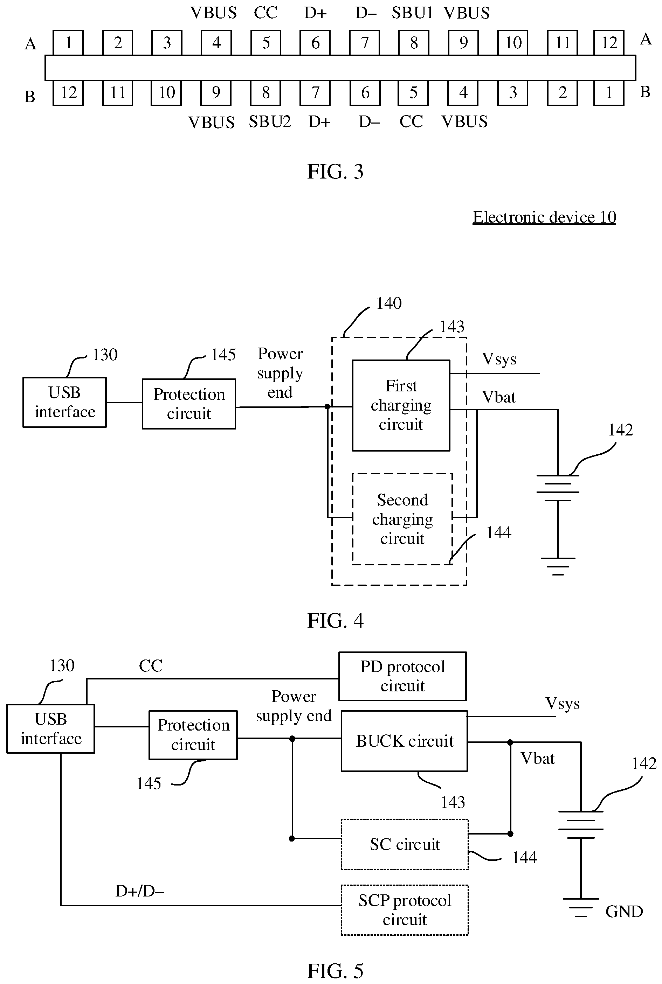

In addition, with reference to FIG. 1, to enable the electronic device 10 to be coupled to the charger 20, the charger 20 may include the plug 200 plugged into the USB interface 130 of the electronic device. Refer to FIG. 3. The plug may be a Type-C interface. The Type-C interface may include a CC pin shown in FIG. 3. A type of an external device coupled to the Type-C interface may be identified via the CC pin. In addition, as shown in FIG. 3, a surface A and a surface B of the Type-C interface each include two VBUS pins (a pin 4 and a pin 9 that are used to provide a USB voltage and that are used as voltage output ends in this embodiment of this application) that are symmetrically disposed, a CC pin (a pin 5), a D+ pin (a pin 6 on the surface A or a pin 7 on the surface B), a D- pin (a pin 7 on the surface A or a pin 6 on the surface B), and an SBU pin (a pin 8 that is a spare pin, which is marked as SBU1 on the surface A, and marked as SBU2 on the surface B). In addition, the plug may have another pin used for grounding, idleness, or the like. When the plug 200 of the switching power supply 20 is plugged into the USB interface 130 of the electronic device 10, charging the electronic device 10 or supplying power to the electronic device 10 may be implemented.

To implement normal charging or fast charging of the battery, refer to FIG. 4. The charging circuit 140 may include a first charging circuit 143 configured to charge the battery, a power supply end of the first charging circuit 143 is connected to a VBUS pin of the USB interface 130, and a charging end Vbat of the first charging circuit 143 is connected to the battery 142. The processor 110 or a charging management module 141 may control the first charging circuit 143 according to a charging protocol, to convert, through the first charging circuit 143, a voltage of the power supply end into a voltage Vbat near a battery voltage (usually 5 V), and then charge the battery 142 by using the voltage Vbat. As shown in FIG. 4, the first charging circuit 143 further includes a system voltage end Vsys, configured to provide a voltage for a load circuit Rload. In some examples, the charging circuit 140 may further include a second charging circuit 144 configured to fast charge the battery 142, and the second charging circuit 144 is connected between the power supply end and the charging end Vbat. The processor 110 or the charging circuit 140 may control the second charging circuit 144 according to a charging protocol, to convert, through the second charging circuit 144, the voltage of the power supply end into the voltage Vbat near the battery voltage (usually 5 V), and then charge the battery 142 by using the voltage Vbat. It should be noted that, to enable the electronic device to be usually coupled to an external device (for example, a device like the charger, an analog headset, a digital headset, a mobile storage device, or a mobile terminal) through the USB interface 130, the power supply end of the first charging circuit 143 is generally coupled to the VBUS pin. When being connected to an external charger through the USB interface 130, the electronic device may negotiate a charging voltage with the charger based on pins such as the CC pin, the D+ pin, and the D- pin according to the charging protocol. For example, for a charger that supports a power delivery (power delivery, PD) charging protocol, a charging parameter is negotiated via the CC pin. For a charger that supports a supercharge protocol (supercharger protocol, SCP), a charging parameter is negotiated via the D+ pin and the D- pin.

Generally, the first charging circuit 143 shown in FIG. 4 may be a buck circuit, and the second charging circuit 144 may be an SC circuit.

In addition, with reference to FIG. 5, a mainstream charging solution is as follows: The electronic device further includes a PD protocol circuit and an SCP protocol circuit that are configured to implement charging protocol detection. The PD protocol circuit is connected to the CC pin of the USB interface 130, and the SCP protocol circuit is connected to the D+/D- pin of the USB interface 130. After the charger is inserted into the USB interface 130, the PD protocol circuit is used to detect (according to the PD charging protocol) that the charger supports normal charging. In this case, a buck circuit is controlled to implement a conversion ratio between an input voltage and an output voltage. The SCP protocol circuit is used to detect (according to the SCP charging protocol) that the charger supports fast charging. In this case, an SC circuit is controlled to implement a conversion ratio between the input voltage and the output voltage. It should be noted that the PD protocol circuit and the SCP protocol circuit may be separately disposed logic circuits such as processors and MCUs, or may be integrated into the processor 110 or the power management module 141 shown in FIG. 2 for implementation. Certainly, to reduce an external analog component (for example, a logic circuit like an MCU), the buck circuit and the PD protocol circuit may alternatively be integrated into a same buck chip, and/or the SC circuit and the SCP protocol circuit may alternatively be integrated into a same SC chip. In addition, as shown in FIG. 4 and FIG. 5, the electronic device further includes a protection circuit 145 disposed between the USB interface 130 and the charging circuit 140. A protection threshold is set for the protection circuit 145. When an electrical parameter of a power signal output by the charger exceeds the protection threshold, the protection circuit 145 may be triggered to be open, so that a path between the USB interface 130 and the charging circuit 140 is disconnected, and charging is stopped. This ensures system safety and stability.

With rapid development of fast charging technologies of electronic devices, maximum charging power has reached more than 200 W. However, in a charging parameter (voltage or current) adjustment process, a current or voltage output by a charger is usually adjusted at a small fixed step (amplitude). It takes a long time to reach a preset current or voltage. Consequently, a current or voltage rise speed is slow in a current or voltage rise phase, resulting in a slow charging speed.

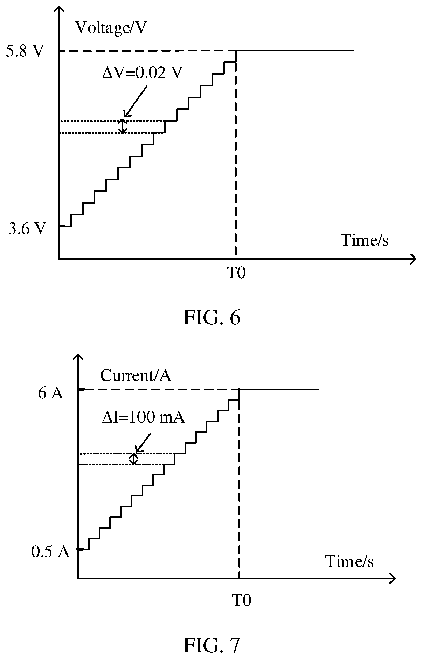

For example, a manner of increasing the charging current is as follows: Under a charging protocol determined by the charger and the electronic device through negotiation, the electronic device sends a charging control instruction, so that the charger controls the charging voltage output by the power conversion circuit to gradually reach, through fine adjustment based on a fixed step from a current voltage, a target voltage obtained through negotiation. Because impedance on a charging path between the charger and the battery of the electronic device basically remains unchanged, the charging current flowing into the battery also increases as the charging voltage increases, and gradually reaches the specified current. Refer to FIG. 6. For example, an adjustment step of a charging voltage under a current charging protocol is a fixed step $\Delta V=0.02$ V. If an initial charging voltage is 3.6 V and an initial current is 0.5 A, and a target voltage obtained through negotiation is 5.8 V and a target current is 6 A, it takes more than 27.5s to adjust the charging voltage to the target voltage (that is, reach 5.8 V at a moment T0) if it takes 250 ms to adjust the charging voltage by $\Delta V=0.02$ V each time.

In another manner of increasing the charging current, a maximum output voltage is set for the charger, and then an output current is set based on a current capability, so that the charger controls the charging current output by the power conversion circuit to gradually reach, through fine adjustment based on a fixed step from a current voltage, a maximum output current obtained through negotiation. Refer to FIG. 7. For example, an adjustment step of a charging current under a current charging protocol is a fixed step $\Delta I=100$ mA. If an initial charging voltage is 3.6 V and an initial current is 0.5 A, and a target voltage obtained through negotiation is 5.8 V and a target current is 6 A, it takes more than 13.75s to adjust the charging current to the target current if it takes 250 ms to adjust the charging current by $\Delta I=100$ mA each time.

However, in a process in which the charging voltage or the charging current rises to a target value, because the electronic device cannot be always charged by using a maximum target voltage or a maximum target current in the entire rise phase, longer time of the rise phase indicates a slower charging speed.

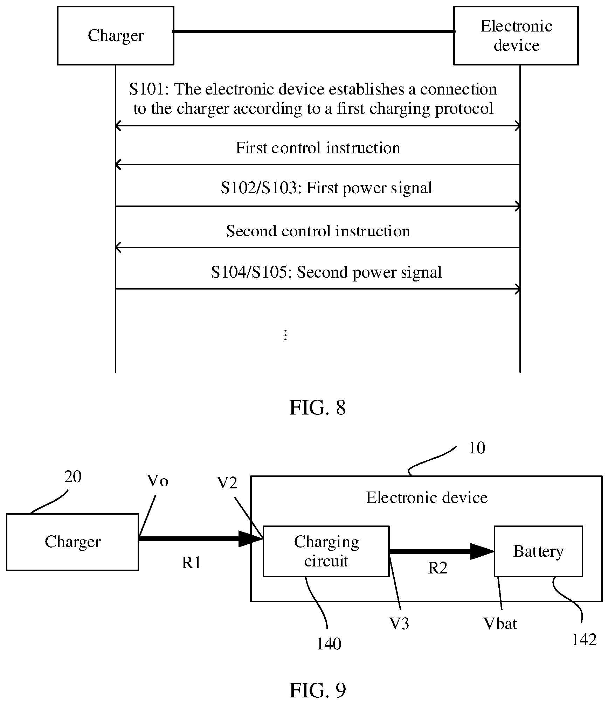

To increase the charging speed in the charging voltage or charging current rise phase, an embodiment of this application provides a charging control method, applied to an electronic device. The electronic device and a charger form a charging system. The electronic device includes the charging circuit provided in the foregoing example, and the charger includes a power conversion circuit. Refer to FIG. 8. The method specifically includes the following steps.

S101: The electronic device establishes a connection to the charger according to a first charging protocol.

For example, the first charging protocol includes but is not limited to charging protocols such as the foregoing PD charging protocol and SCP charging protocol. A mechanism of the PD charging protocol is as follows: The charger first broadcasts a charging capability list in a broadcast message. After receiving the broadcast message, the electronic device reads the charging capability list, selects a supported charging capability from the list, and initiates a charging request to the charger. A mechanism of the SCP charging protocol is as follows: The electronic device queries the charger for a charging capability of the charger, selects a supported charging capability from a charging capability list returned by the charger, and initiates a charging request to the charger, so that the electronic device establishes the connection to the charger.

S102: The power conversion circuit of the charger outputs a first power signal to the electronic device in a first time period under the first charging protocol.

S103: The charging circuit of the electronic device receives, in the first time period under the first charging protocol, the first power signal output by the charger, where the first power signal has a first electrical parameter.

Specifically, the electronic device may further include a processing circuit and the charger may further include a processing circuit. Before step S102, the processing circuit of the electronic device may send a first control instruction to the processing circuit of the charger in a previous time period of the first time period. The first control instruction includes the first electrical parameter, or the first control instruction includes an electrical parameter of a power signal output by the charger before the first time period. In this way, after receiving the first control instruction, the processing circuit of the charger may specifically send the first power signal to the electronic device in step S102 in response to the first control instruction.

S104: The power conversion circuit of the charger outputs a second power signal to the electronic device in a second time period under the first charging protocol, where the second power signal has a second electrical parameter.

S105: The charging circuit of the electronic device receives, in the second time period under the first charging protocol, the second power signal output by the charger, where the second power signal has the second electrical parameter.

Specifically, before step S104, the processing circuit of the electronic device sends a second control instruction to the charger in the first time period, where the second control instruction includes the second electrical parameter, or the second control instruction includes the first electrical parameter in the first time period. In this way, after receiving the second control instruction, the processing circuit of the charger may specifically send the second power signal to the electronic device in step S104 in response to the second control instruction.

The second electrical parameter is greater than the first electrical parameter, the second time period is after the first time period and is adjacent to the first time period, and a difference between the second electrical parameter and the first electrical parameter is n times a minimum adjustment step supported by the charger under the first charging protocol, where n is a positive integer, and n is greater than or equal to 2.

In addition, after step S105, the power conversion circuit of the charger may further output a third power signal to the electronic device in a third time period under the first charging protocol. The charging circuit of the electronic device receives, in the third time period under the first charging protocol, the third power signal output by the charger, where the third power signal has a third electrical parameter. The third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, where m is an integer. A value relationship between m and n is not limited in embodiments of this application. To be specific, adjustment values for two times of adjustment of a power signal may be the same or different based on an actual situation, and may gradually increase or decrease.

In the foregoing solution, under a fixed charging protocol, after the electronic device establishes the connection to the charger, the charger provides power signals for charging to the charging circuit of the electronic device at different power in any two adjacent time periods. In addition, the electronic device is charged in a first time period of the any two adjacent time periods via the first power signal having the first electrical parameter, and the electronic device is charged in a second time period via the second power signal having the second electrical parameter. The second electrical parameter is greater than the first electrical parameter, and the difference between the second electrical parameter and the first electrical parameter is n times the minimum adjustment step of the electrical parameter supported by the charger under the current charging protocol, where n is a positive integer greater than or equal to 2. Therefore, an electrical parameter of the power signal can be adjusted in an adjustment manner in which an actual adjustment step is greater than the minimum adjustment step of the electrical parameter supported by the current charging protocol. Therefore, a charging voltage or a charging current can quickly rise to a target value, thereby increasing the charging speed.

Specifically, in the following example, an adjustment value used for the electrical parameter each time may be determined by the electronic device or the charger. In the foregoing example, a process of obtaining the second electrical parameter of the second power signal is used as an example. In some examples, the processing circuit of the electronic device may detect the first power signal in the first time period to obtain the first electrical parameter of the first power signal. For example, the first electrical parameter may be a voltage or a current. Then, the second electrical parameter is determined based on a difference between the first electrical parameter and the target value (for example, the target value may be a target charging voltage or a target charging current negotiated according to a protocol). Alternatively, in some examples, the first electrical parameter obtained by the processing circuit of the electronic device may be sent to the charger, and the processing circuit of the charger determines the second electrical parameter based on the difference between the first electrical parameter and the target value.

In the following several examples, three manners of determining the second electrical parameter are mainly provided. In general, a first manner may be: determining an adjustment value based on the difference between the first electrical parameter and the target value by querying a relationship table, where the relationship table includes a correspondence between the difference and the adjustment value; and determining the second electrical parameter based on the first electrical parameter and the adjustment value. A second manner may be: rounding a predetermined proportion of the difference between the first electrical parameter and the target value as an adjustment value; and determining the second electrical parameter based on the first electrical parameter and the adjustment value. A third manner may be: rounding a half of the difference between the first electrical parameter and the target value as an adjustment value; and determining the second electrical parameter based on the first electrical parameter and the adjustment value.

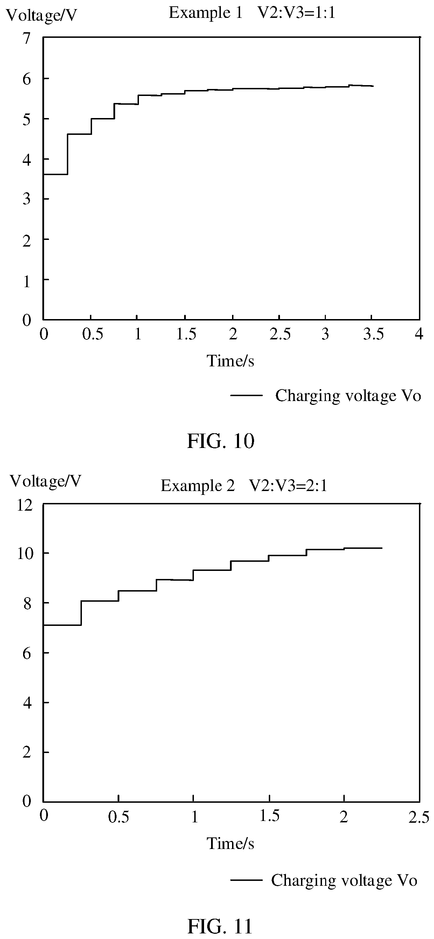

In the following examples, refer to FIG. 9. FIG. 9 is a diagram of an equivalent circuit of a charging system including a charger 20 and an electronic device 10. A charging voltage output by the charger 20 is marked as Vo, an input voltage of a charging circuit 140 of the electronic device 10 is marked as V2, an output voltage of the charging circuit 140 of the electronic device 10 is marked as V3, and a voltage of a battery 142 is marked as Vbat. Link impedance between the charger 20 and the charging circuit 140 is marked as R1 (a current flowing through R1 is I1), and link impedance between the charging circuit 140 and the battery 142 is marked as R2 (where R2 includes an internal resistance of the battery, and a current flowing through R2 is I2). With reference to FIG. 11, the charging method provided in embodiments of this application is described as follows by using the foregoing three manners of determining the second electrical parameter as examples.

In Example 1 to Example 6, an example in which a power signal is a charging voltage is mainly used for description, in other words, an example in which the charging voltage output by the charger 20 is adjusted is used for description.

Example 1: The charging circuit 140 is a switch circuit in which V2:V3=1:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm). Table 1 is set based on differences between charging currents output by the charger and the target charging current. A corresponding adjustment step amplitude (adjustment value) of a charging voltage is set to n*20 mV, where 20 mV is a minimum voltage step amplitude that can be adjusted by the charger under a current charging protocol. Minimum voltage step amplitudes of different chargers may be different due to hardware and protocols. The target charging current may be set in the following manner: The set target charging current is calculated based on maximum current output capabilities of various voltage levels of the charger, link impedance, a through-current capability of the charging circuit, the battery voltage, and a maximum current that is allowed to flow into the battery at the voltage, based on a plurality of factors such as a current overall temperature, a current interface temperature, and a current battery temperature of the electronic device, and based on preset setting logic. The step amplitude n*20 mV is an adjustment value for one-time adjustment. To be specific, if n=10, 200 mV needs to be adjusted at a time, that is, a one-time adjustment value corresponding to a time period in embodiments of this application is 200 mV.

Table 1

| Current difference | Range 1: [0, 1 A) | Range 2: [1, 2 A) | Range 3: [2, 4 A) | Range 4: [4, 8 A) |
|---|---|---|---|---|
| Voltage adjustment step amplitude | n*20 mV (n=1) | n*20 mV (n=10) | n*20 mV (n=20) | n*20 mV (n=50) |

It should be noted that a value of n in Table 1 is merely an empirical value usually provided that time of a voltage or current rise phase can be shortened. Therefore, it may be considered that n may be any positive integer. Generally, in some examples, in Table 1, a larger difference (current difference) between a first electrical parameter and a target value indicates a larger corresponding adjustment value (voltage adjustment step amplitude). In this way, an adjustment speed of the electrical parameter of the power signal can be increased, to increase a current or voltage rise speed, thereby increasing a charging speed.

Based on Table 1, with reference to FIG. 10, first-time charging voltage adjustment is as follows:
A difference between the charging current output by the charger and the target charging current is |0.5 A-6 A|=5.5 A, and it is determined, by querying Table 1, that 5.5 A is in the range 4. Therefore, a voltage adjustment step amplitude (adjustment value) is 50*20 mV=1 V. In this case, adjusted Vo=3.6 V+1 V=4.6 V. Based on link impedance (for example, 400 mohm), each time a charging voltage is adjusted by 20 mV, a charging current changes by about 50 mA. Therefore, when the adjustment value of the charging voltage Vo is 50*20 mV, the charging current changes by 50*50 mA=2.5 A. In this case, an adjusted charging current is 0.5 A+2.5 A=3 A.

Second-time charging voltage adjustment is as follows: A difference between the charging current output by the charger and the target charging current is |3 A-6 A|=3 A, and it is determined, by querying Table 1, that 3 A is in the range 3. Therefore, a voltage adjustment step amplitude is 20*20 mV=0.4 V. In this case, adjusted Vo=4.6 V+0.4 V=5 V. Based on the link impedance (400 mohm), each time the charging voltage is adjusted by 20 mV, the charging current changes by about 50 mA. Therefore, when the adjustment value of the charging voltage Vo is 20*20 mV, the current changes by 20*50 mA=1 A. In this case, an adjusted charging current is 3 A+1 A=4 A.

Third-time charging voltage adjustment is as follows: A difference between the charging current output by the charger and the target charging current is |4 A-6 A|=2 A, and it is determined, by querying Table 1, that 2 A is in the range 3. Therefore, a voltage adjustment step amplitude is 20*20 mV=0.4 V. In this case, adjusted Vo=5 V+0.4 V=5.4 V. Based on the link impedance (400 mohm), each time the charging voltage is adjusted by 20 mV, the charging current changes by about 50 mA. Therefore, the current changes by 20*50 mA=1 A. In this case, a current is 4 A+1 A=5 A.

Fourth-time charging voltage adjustment is as follows: A current difference is |5 A-6 A|=1 A, and it is determined, by querying Table 1, that 1 A is in the range 2. Therefore, a voltage adjustment step amplitude is 10*20 mV=0.2 V (Vo=5.4 V+0.2 V=5.6 V). Based on the link impedance (for example, 400 mohm), each time the charging voltage is adjusted by 20 mV, the charging current changes by about 50 mA. Therefore, when the adjustment value of the charging voltage Vo is 20*20 mV, the current changes by 10*50 mA=0.5 A. In this case, an adjusted charging current is 5 A+0.5 A=5.5 A.

The rest may be deduced by analogy.

The charging voltage changes from 3.6 V->4.6 V->5 V->5.4 V->5.6 V->5.62 V->... to 5.8 V.

The charging current changes from 0.5 A->3 A->4 A->5 A->5.5 A->5.55 A->... to 6 A.

Example 2:

The charging circuit 140 is a switch circuit in which V2:V3=2:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm).

According to the Ohm's law, an equivalent circuit shown in FIG. 11 has the following conversion relationships:

$$V2=2*V3;\ \text{Formula 1}$$

$$V2=Vo–I1*R1;\ \text{Formula 2}$$

$$V3=Vbat+I2*R2;\ \text{Formula 3}$$

$$I2=2*I1;\ \text{Formula 4}$$

Before the charging voltage Vo is adjusted, the foregoing assumed conditions are substituted into Formulas 1 to 4:

$$V2=2*V3=6.96\ V;$$

$$6.96\ V=Vo–0.5\ A*320\ mohm;$$

$$V3=3.4\ V+1\ A*80\ mohm=3.48\ V;$$

and

$$1\ A=2*0.5\ A.$$

Vo=7.12 V may be obtained.

Based on Table 1 in the foregoing Example 1, with reference to FIG. 11, first-time charging voltage adjustment is as follows:
A difference between the charging current output by the charger and the target charging current is |0.5 A-6 A|=5.5 A, and it is determined, by querying Table 1, that 5.5 A is in the range 4. Therefore, an adjustment step amplitude of the charging voltage Vo is 50*20 mV=1 V. If Vo=7.12 V+1 V=8.12 V, because Vbat, R1, and R2 remain unchanged, I1=2.0625 A. In other words, after Vo is increased by 1 V, the charging current output by the charger changes from 0.5 A to 2.0625 A. 2.06 A may be obtained by rounding 2.0625 A (herein, to ensure safety and avoid excessive adjustment of the charging voltage, rounding may be usually rounding down).

Second-time charging voltage adjustment is as follows: A difference between the charging current output by the charger and the target charging current is |2.06 A-6 A|=3.94 A, and it is determined, by querying Table 1, that 3.94 A is in the range 3. Therefore, an adjustment step amplitude of the charging voltage Vo is 20*20 mV=400 mV. If Vo=8.12 V+0.4 V=8.52 V, because Vbat, R1, and R2 remain unchanged, I1=2.6875 A. In other words, after Vo is increased by 1.4 V, the charging current output by the charger changes from 2.0625 A to 2.6875 A (rounded down to 2.68).

The rest may be deduced by analogy.

The charging voltage output by the charger changes from 7.12 V->8.12 V->8.52 V->8.92 V->9.32 V->9.72 V->... to 10.64 V.

The charging current changes from 0.5 A->2.06 A->2.68 A->3.31 A->3.93 A->4.56 A->... to 6 A.

Although the foregoing Example 1 and Example 2 are described by using only V2:V3=1:1 and V2:V3=2:1 as examples, it may be understood that a specific ratio range of V2:V3 is not limited in embodiments of this application, that is, a scenario in which another ratio is used, shall also fall within the protection scope of this application. According to Example 1, time in which the charging current reaches the target current is 3.5s. If adjustment is performed by using 50 mA as a fixed step in the manner in FIG. 6, a period of each adjustment is 250 ms (the period time is related to a system software procedure of the electronic device, and varies with different vendors). In this case, it takes 27.5s (6 A-0.5 A)/0.05 mA*250 ms=27.5s) to adjust the initial charging current 0.5 A to the target current 6 A. To be specific, compared with the adjustment solution shown in FIG. 6, in this solution, charged energy may be increased from original 50 mAh to 90.4 mAh within same time, and an increase amount is approximately 40 mAh. For a battery with a typical capacity of 4000 mAh, a charging speed may be increased by 1%. According to Example 2, time in which the charging current reaches the target current is 8.25s. Compared with the adjustment solution shown in FIG. 6, in this solution, charged energy may be increased from original 100 mAh to 176.4 mAh within same time, and an increase amount is approximately 76 mAh. For the battery with the typical capacity of 4000 mAh, the charging speed may be increased by 1.9%.

Example 3: The charging circuit 140 is a switch circuit in which V2:V3=1:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, an initial value Vo of the charging voltage is equal to 3.6 V (3.4 V+0.5 A*400 mohm).

Different from Example 1, in Example 3, the charging voltage may be adjusted to a large extent during first-time charging voltage adjustment, to shorten time of a voltage or current rise phase.

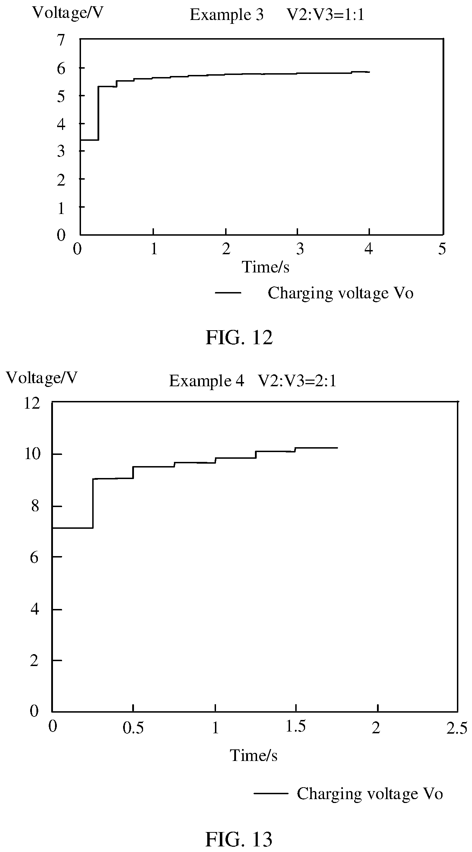

Refer to FIG. 12. First-time charging voltage adjustment is as follows:
It is considered that the target charging voltage Vo=Vbat+I1*(R1+R2)=Vbat+2.4 V when the charging current reaches the target charging current, that is, a difference (charging voltage increment) between a target charging voltage and the initial charging voltage is 2.4 V. In consideration of safety of the device, a specific margin may be set for the voltage increment of the charging voltage, to be specific, the charging voltage may be adjusted based on an adjustment value determined based on a predetermined proportion of the difference between the target charging voltage and the initial charging voltage: Vo=Vbat+2.4 V*80%=3.4 V+1.92 V=5.32 V (where the predetermined proportion 80% is a recommended value, and an actual proportion may be obtained through different circuit commissioning, that is, other values may be set in some examples. It should be noted that limited by a minimum step (for example, 20 mV) of a charging voltage adjustment amplitude of the charger, to be specific, a minimum amplitude allowed for each adjustment is 20 mV, and each adjustment can only be performed at a granularity of a multiple of 20 mV, when a value of the predetermined proportion of the difference cannot be exactly divided by 50 mV, the value may be rounded as an adjustment value). In this way, the charging voltage Vo output by the charger is increased by 1.92 V through first-time charging voltage adjustment. After the charging voltage is increased, a current charging current is 4.8 A (1.92 V/400 mohm).

Subsequently, second-time charging voltage adjustment and third-time charging voltage adjustment may be implemented in the manner in Example 1 with reference to Table 1. To be specific, the charging current is gradually adjusted to 6 A based on the voltage adjustment step amplitude set in Table 1 by querying Table 1. The rest may be deduced by analogy. In this case,

the charging voltage output by the charger changes from 3.6 V->5.32 V->5.52 V->5.54 V-> 5.56 A->... to 5.8 V, and the charging current changes from 0.5 A->4.8 A->5.3 A-> 5.35 A->... to 6 A.

Example 4:

The charging circuit 140 is a switch circuit in which V2:V3=2:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm). Vo=7.12 V may be obtained by substituting the foregoing assumed conditions into Formulas 1 to 4.

Different from Example 1, in Example 4, the charging voltage may be adjusted to a large extent during first-time voltage adjustment, to shorten time of a voltage rise phase.

Refer to FIG. 13. First-time charging voltage adjustment is as follows:
It is considered that I1=6 A when the charging current reaches the target charging current. In this case, V3=3.4 V+12 A*80 mohm=4.36 V. In addition, V2=2V3=8.72 V. In this case, the target charging voltage Vo=V2+I1R1=8.72 V+3 A*320 mohm=9.68 V. In consideration of safety of the device, a specific margin may be set for a voltage increment of the charging voltage, to be specific, the charging voltage may be adjusted based on an adjustment value determined based on a predetermined proportion of a difference between the target charging voltage and an initial charging voltage: Vo'= (Vo-2*Vbat)*80%+2*Vbat=9.104 V. It is considered that a minimum adjustable step is 50 mV. In this case, Vo is rounded down to 9.10 V.

In this way, the charging voltage Vo output by the charger is adjusted to 9.10 V through first-time charging voltage adjustment. After the charging voltage is increased, a current charging current is I1=3.59 A.

Subsequently, second-time charging voltage adjustment and third-time charging voltage adjustment may be implemented in the manner in Example 1 with reference to Table 1. To be specific, the charging current is gradually adjusted to 6 A based on the voltage adjustment step amplitude set in Table 1 by querying Table 1. The rest may be deduced by analogy. In this case,

the charging voltage output by the charger changes from 7.12 V->9.10 V->9.50 V->9.70 V->... to 10.64 V, and
the charging current changes from 0.5 A->3.59 A->4.22 A->4.53 A->... to 6 A.

Although the foregoing Example 3 and Example 4 are described by using only V2:V3=1:1 and V2:V3=2:1 as examples, it may be understood that a specific ratio range of V2:V3 is not limited in embodiments of this application, that is, a scenario in which another ratio is used, shall also fall within the protection scope of this application. According to Example 3, time in which the charging current reaches the target current is 4s. However, if adjustment is performed by using 50 mA as a fixed step in the manner in FIG. 6, a period of each adjustment is 250 ms (the period time is related to a system software procedure of the electronic device, and varies with different vendors). In this case, it takes 27.5s (6 A-0.5 A)/0.05 mA*250 ms=27.5s) to adjust the initial charging current 0.5 A to the target current 6 A. To be specific, compared with the adjustment solution shown in FIG. 6, in this solution, charged energy may be increased from original 50 mAh to 90.5 mAh within same time, and an increase amount is approximately 40 mAh. For a battery with a typical capacity of 4000 mAh, a charging speed may be increased by 1%. According to Example 4, time in which the charging current reaches the target current is 8s. Compared with the adjustment solution shown in FIG. 8, in this solution, charged energy may be increased from original 100 mAh to 178.3 mAh within same time, and an increase amount is approximately 78 mAh. For the battery with the typical capacity of 4000 mAh, the charging speed may be increased by 1.95%.

Example 5:

The charging circuit 140 is a switch circuit in which V2:V3=1:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm).

Different from Example 1, in Example 5, for the first several times of charging voltage adjustment, an adjustment amplitude is determined for the charging voltage according to a dichotomy, to shorten time of a voltage rise phase.

Theoretically, the charging voltage is increased according to the dichotomy, and a current increased each time is half of a difference (|a current charging current-the target charging current|) between the current charging current and the target charging current. Actually, in consideration of a limitation of the charger on a minimum step of a charging voltage adjustment amplitude, a charging voltage determined according to the dichotomy usually needs to be rounded as an adjustment value. In this way, when the difference between the current charging current and the target charging current is large, time of a current or voltage rise phase can be quickly shortened.

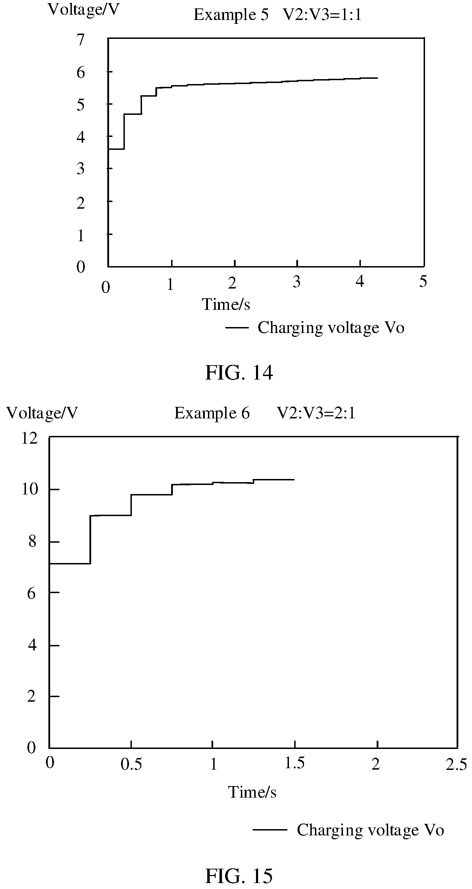

Refer to FIG. 14. First-time charging voltage adjustment is as follows:
A difference between the charging current output by the charger and the target charging current is |0.5 A-6 A|=5.5 A. Therefore, a first-time charging current adjustment value determined according to the dichotomy is |0.5 A-6 A|/2=2.75 A, and a charging voltage adjustment value is (2.75 A+0.5 A)*400 mohm=1.3 V, that is, a charging voltage Vo output by the charger is equal to 3.4+1.3=4.7 V. A current charging current is 2.75 A+0.5 A=3.25 A.

Second-time charging voltage adjustment is as follows:
A difference between the charging current output by the charger and the target charging current is |3.25 A-6 A|=2.75 A. Therefore, a second-time charging current adjustment value that is for second-time current adjustment and that is determined according to the dichotomy is |3.25 A-6 A|/2=1.375 A. In this case, a charging voltage adjustment value is 1.375 A*400 mohm=0.55 V, that is, a charging voltage Vo output by the charger is 4.7+0.55=5.25 V. In consideration of a minimum adjustable step (it is assumed that the minimum adjustable step is 0.02 V) of the charging voltage, the charging voltage is set to Vo=5.24 V through rounding down. A current charging current is (5.24 V-3.4 V)/400 mohm=4.6 A.

Third-time charging voltage adjustment is as follows:
A difference between the charging current output by the charger and the target charging current is |4.6 A-6 A|=1.4 V.

Therefore, a third-time charging current adjustment value that is for second-time current adjustment and that is determined according to the dichotomy is |4.6 A-6 A|/2=0.7 A. In this case, a charging voltage adjustment value is 0.7 A*400 mohm=0.28 V, that is, a charging voltage Vo output by the charger is 5.24+0.28=5.52 V. A current charging current is (5.52 V-3.4 V)/400 mohm=5.3 A.

Subsequently, fourth-time charging voltage adjustment and fifth-time charging voltage adjustment may be implemented in the manner in Example 1 with reference to Table 1. To be specific, the charging current is gradually adjusted to 6 A based on the voltage adjustment step amplitude set in Table 1 by querying Table 1. The rest may be deduced by analogy. In this case,

the charging current output by the charger changes from 0.5 A->3.25 A->4.6 A->5.3 A->5.35 A->... to 6 A, and
the charging voltage changes from 3.6 V->4.7 V->5.24 V->5.52 V->5.54 V->... to 5.8 V.

Certainly, in Example 5, the charging voltage may alternatively be adjusted in the manner provided in Example 1 starting from second-time charging voltage adjustment. That is, in embodiments of this application, a specific time from which the charging voltage is adjusted in the manner in Example 1 is not limited, in other words, any one or more of the foregoing Example 1, Example 3, and Example 5 may be used in an entire charging voltage adjustment process based on configuration.

Example 6:

The charging circuit 140 is a switch circuit in which V2:V3=2:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm). Vo=7.12 V may be obtained by substituting the foregoing assumed conditions into Formulas 1 to 4.

Different from Example 1, in Example 6, for the first several times of charging voltage adjustment, an adjustment amplitude is determined for the charging voltage according to a dichotomy, to shorten time of a voltage rise phase.

Refer to FIG. 15. First-time charging voltage adjustment is as follows:

A difference between the charging current output by the charger and the target charging current is |0.5 A-6 A|=5.5 A. Therefore, a first-time charging current adjustment value that is for first-time current adjustment and that is determined according to the dichotomy is |0.5 A-6 A|/2=2.75 A, that is, I1=2.75+0.5=3.25 A. According to Formulas 1 to 4, V3=3.4 V+6.5 A*80 mohm=3.92 V, and V2=2*3.92 V=7.84 V. In this case, a charging voltage Vo output by the charger is equal to 7.84 V+3.25 A*320 mohm=8.88 V (a minimum adjustable step of the charging voltage needs to be considered; and if an actual adjustable step is not an integer multiple of the minimum adjustable step, rounding down is performed). A current charging current is I1=3.25 A.

Second-time charging voltage adjustment is as follows:

A difference between the charging current output by the charger and the target charging current is |3.25 A-6 A|=2.75 A. Therefore, a second-time charging current adjustment value that is for second-time current adjustment and that is determined according to the dichotomy is |3.25 A-6 A|/2=1.375 A, that is, I1=3.25+1.375=4.625 A. According to Formulas 1 to 4, V3=3.4 V+9.25 A*80 mohm=4.14 V, and V2=2*4.14 V=8.28 V. In this case, a charging voltage Vo output by the charger is equal to 8.28 V+4.625 A*320 mohm=9.76 V (a minimum adjustable step of the charging voltage needs to be considered; and if an actual adjustable step is not an integer multiple of the minimum adjustable step, rounding down is performed). A current charging current is I1=4.625 A.

Third-time charging voltage adjustment is as follows:

A difference between the charging current output by the charger and the target charging current is |4.625 A-6 A|=1.375 A. Therefore, a second-time charging current adjustment value that is for second-time current adjustment and that is determined according to the dichotomy is |4.625 A-6 A|/2=0.6875 A, that is, I1=4.625+0.6875=5.3125 A. According to Formulas 1 to 4, V3=3.4 V+10.625 A*80 mohm=4.25 V, and V2=2*4.25 V=8.5 V. In this case, a charging voltage Vo output by the charger is equal to 8.5 V+5.3125 A*320 mohm=10.2 V (a minimum adjustable step of the charging voltage needs to be considered; and if an actual adjustable step is not an integer multiple of the minimum adjustable step, rounding down is performed). A current charging current is I1=5.3125 A.

Subsequently, fourth-time charging voltage adjustment and fifth-time charging voltage adjustment may be implemented in the manner in Example 1 with reference to Table 1. To be specific, the charging current is gradually adjusted to 6 A based on the voltage adjustment step amplitude set in Table 1 by querying Table 1. The rest may be deduced by analogy. In this case,

the charging current output by the charger changes from 0.5 A->3.25 A->4.625 A->5.3125 A->5.3625 A->... to 6 A. It is considered current adjustment precision, and rounding is performed. In this case, an actual value changes from 0.5 A->3.25 A->4.62 A->5.31 A->5.36 A->... to 6 A.

The charging voltage changes from 7.12 V->8.88 V->9.76 V-> 10.2 V-> 10.22 V->... To 10.64 V.

Certainly, in Example 6, the charging voltage may alternatively be adjusted in the manner provided in Example 2 starting from second-time charging voltage adjustment. That is, in embodiments of this application, a specific time from which the charging voltage is adjusted in the manner in Example 2 is not limited, in other words, any one or more of the foregoing Example 2, Example 4, and Example 6 may be used in an entire charging voltage adjustment process based on configuration.

Although the foregoing Example 5 and Example 6 are described by using only V2:V3=1:1 and V2:V3=2:1 as examples, it may be understood that a specific ratio range of V2:V3 is not limited in embodiments of this application, that is, a scenario in which another ratio is used, shall also fall within the protection scope of this application.

According to Example 5, time in which the charging current reaches the target current is 4.25s. However, if adjustment is performed by using 50 mA as a fixed step in the manner in FIG. 6, a period of each adjustment is 250 ms (the period time is related to a system software procedure of the electronic device, and varies with different vendors). In this case, it takes 27.5s (6 A-0.5 A)/0.05 mA*250 ms=27.5s) to adjust the initial charging current 0.5 A to the target current 6 A. To be specific, compared with the adjustment solution shown in FIG. 8, in this solution, charged energy may be increased from original 50 mAh to 90.43 mAh within same time, and an increase amount is approximately 40 mAh. For a battery with a typical capacity of 4000 mAh, a charging speed may be increased by 1%. According to Example 6, time in which the charging current reaches the target current is 6.25s. Compared with the adjustment solution shown in FIG. 6, in this solution, charged energy may be increased from original 100 mAh to 180.1 mAh within same time, and an increase amount is approximately 80 mAh. For the battery with the typical capacity of 4000 mAh, the charging speed may be increased by 2%.

In Example 7 and Example 8, an example in which a power signal is a charging current is mainly used for description, in other words, an example in which a charging current output by the charger 20 is adjusted is used for description.

Example 7:

The charging circuit 140 is a switch circuit in which V2:V3=1:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm). When a charging current is adjusted, an adjustment threshold of a charging voltage is first relaxed, and then an adjustment value of the charging current is determined based on a difference between the charging current and the target charging current by querying Table 2. According to Table 1, a corresponding adjustment step amplitude (adjustment value) of the charging current is set to n*50 mA, where 50 mA is a minimum current step amplitude that can be adjusted by the charger under the current charging protocol. Minimum current step amplitudes of different chargers may be different due to hardware and protocols. The step amplitude n*50 mA is an adjustment value for one-time adjustment. To be specific, if n=10, 500 mA needs to be adjusted at a time, that is, a one-time adjustment value corresponding to a time period in embodiments of this application is 500 mA.

Table 2

| Current difference | Range 1: [0, 1 A) | Range 2: [1, 2 A) | Range 3: [2, 4 A) | Range 4: [4 A, 8 A) |
|---|---|---|---|---|
| Current adjustment step | n*50 mA (n=1) | n*50 mA (n=10) | n*50 mA (n=20) | n*50 mA (n=50) |

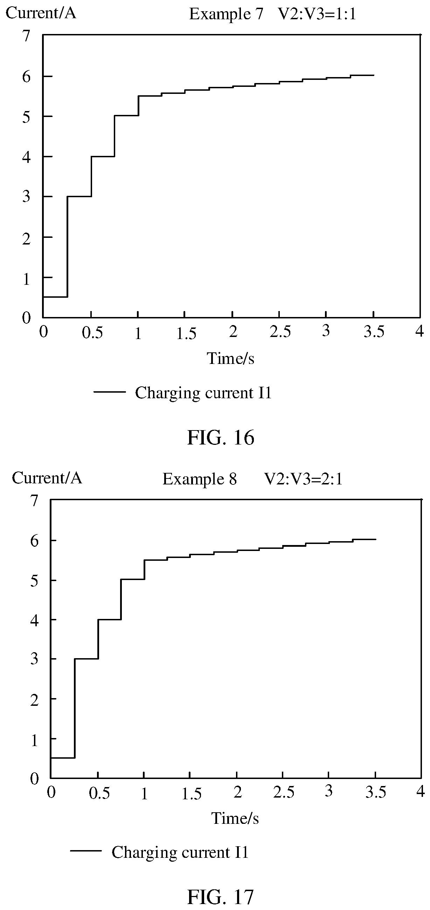

With reference to FIG. 16, first-time charging current adjustment is as follows:
A difference between the charging current output by the charger and the target charging current is |0.5 A-6 A|=5.5 A, and it is determined, by querying Table 2, that 5.5 A is in the range 4. Therefore, an adjustment step amplitude (adjustment value) of the current is 50*50 mA=2.5 A. In this case, an adjusted current charging current is 0.5 A+2.5 A=3 A (that is, a constant current loop control reference inside the charger is set to 3 A, and because a voltage adjustment limit is lifted in advance, a current output by the charger is subject to a control parameter of a constant current loop).

Second-time charging current adjustment is as follows:
A difference between the charging current output by the charger and the target charging current is |3 A-6 A1=3 A, and it is determined, by querying Table 2, that 3 A is in the range 3. Therefore, an adjustment step amplitude (adjustment value) of the current is 20*50 mA=1 A. In this case, a current charging current is 3 A+1 A=4 A.

Third-time charging current adjustment is as follows:
A difference between the charging current output by the charger and the target charging current is |4 A-6 A|=2 A, and it is determined, by querying Table 2, that 2 A is in the range 3. Therefore, an adjustment step amplitude (adjustment value) of the current is 20*50 mA=1 A. In this case, a current charging current is 4 A+1 A=5 A.

Fourth-time charging current adjustment is as follows:

A difference between the charging current output by the charger and the target charging current is |5 A-6 A|=1 A, and it is determined, by querying Table 2, that 1 A is in the range 2. Therefore, an adjustment step amplitude (adjustment value) of the current is 10*50 mA=0.5 A. In this case, a current charging current is 5 A+0.5 A=5.5 A.

The rest may be deduced by analogy.

The charging current changes from 0.5 A->3 A->4 A->5 A->5.5 A->5.55 A->... to 6 A.

Example 8:

The charging circuit 140 is a switch circuit in which V2:V3=2:1. It is assumed that an initial charging current (electrical parameter) output by the charger 20 is 0.5 A, a target charging current is 6 A, the battery voltage Vbat is equal to 3.4 V, the link impedance R1 is equal to 320 mohm, and R2 is equal to 80 mohm. In this case, Vo=3.6 V (3.4 V+0.5 A*400 mohm).

When a charging current is adjusted, an adjustment threshold of a charging voltage is first relaxed, and then an adjustment value of the charging current is determined based on a difference between the charging current and the target charging current by querying Table 2. With reference to FIG. 17, first-time charging current adjustment is as follows:

A difference between the charging current output by the charger and the target charging current is |0.5 A-6 A|=5.5 A, and it is determined, by querying Table 2, that 5.5 A is in the range 4. Therefore, an adjustment step amplitude (adjustment value) of the current is 50*50 mA=2.5 A. In this case, an adjusted current charging current is 0.5 A+2.5 A=3 A (that is, a constant current loop control reference inside the charger is set to 3 A, and because a voltage adjustment limit is lifted in advance, a current output by the charger is subject to a control parameter of a constant current loop).

Second-time charging current adjustment is as follows:

A difference between the charging current output by the charger and the target charging current is |3 A-6 A|=3 A, and it is determined, by querying Table 2, that 3 A is in the range 3. Therefore, an adjustment step amplitude (adjustment value) of the current is 20*50 mA=1 A. In this case, a current charging current is 3 A+1 A=4 A.

Third-time charging current adjustment is as follows:

A difference between the charging current output by the charger and the target charging current is |4 A-6 A|=2 A, and it is determined, by querying Table 2, that 2 A is in the range 3. Therefore, an adjustment step amplitude (adjustment value) of the current is 20*50 mA=1 A. In this case, a current charging current is 4 A+1 A=5 A.

Fourth-time charging current adjustment is as follows:

A difference between the charging current output by the charger and the target charging current is |5 A-6 A|=1 A, and it is determined, by querying Table 2, that 1 A is in the range 2. Therefore, an adjustment step amplitude (adjustment value) of the current is 10*50 mA=0.5 A. In this case, a current charging current is 5 A+0.5 A=5.5 A.

The rest may be deduced by analogy.

The charging current changes from 0.5 A->3 A->4 A->5 A->5.5 A->5.55 A->... to 6 A.

Although the foregoing Example 7 and Example 8 are described by using only V2:V3=1:1 and V2:V3=2:1 as examples, it may be understood that a specific ratio range of V2:V3 is not limited in embodiments of this application, that is, a scenario in which another ratio is used, shall also fall within the protection scope of this application.

In the foregoing Example 7, time in which the charging current reaches the target charging current is 3.5s. Compared with the adjustment solution shown in FIG. 7, in this solution, charged energy may be increased from original 50 mAh to 90.4 mAh within same time, and an increase amount is approximately 40 mAh. For a battery with a typical capacity of 4000 mAh, a charging speed may be increased by 1%.

In the foregoing Example 8, time in which the charging current reaches the target charging current is 3.5s. Compared with the adjustment solution shown in FIG. 7, in this solution, charged energy may be increased from original 100 mAh to 181 mAh within same time, and an increase amount is approximately 81 mAh. For the battery with the typical capacity of 4000 mAh, the charging may be increased by 2.0%.

Certainly, the manner of adjusting the charging voltage by a large amplitude based on the predetermined proportion used in the foregoing Example 3 and Example 4 may also be applied to charging current adjustment. To be specific, when the charging current is adjusted for the first time, the charging current may also be adjusted by the large amplitude based on the predetermined proportion. Alternatively, the charging current may be adjusted according to the dichotomy in the manner of adjusting the charging voltage according to the dichotomy in Example 5 and Example 6.

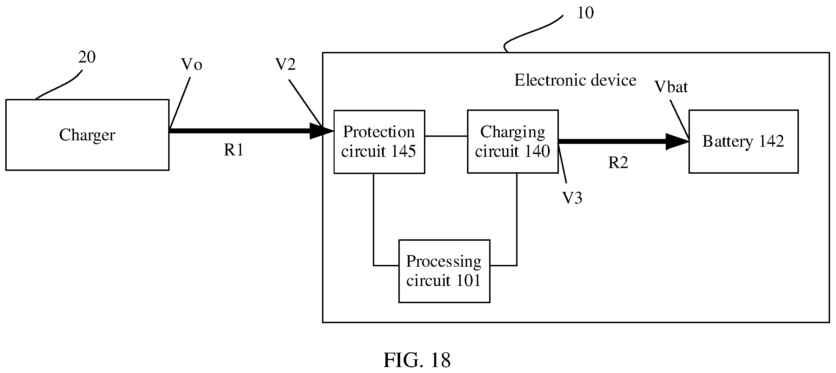

In the foregoing example, the difference between the second electrical parameter and the first electrical parameter is n times the minimum adjustment step of the electrical parameter supported by the charger under the first charging protocol. Therefore, when n is large, the electrical parameter changes greatly, and there is a risk that charging is interrupted because a protection circuit is triggered to be open. Therefore, in embodiments of this application, refer to FIG. 18. An electronic device includes a processing circuit 101, a protection circuit 145, a charging circuit 140, and a battery 142. The protection circuit 145 is connected to a charger 20, and the charging circuit 140 is connected between the protection circuit 145 and the battery 142. The processing circuit 101 is connected to the protection circuit 145 and the charging circuit 140. The charging circuit 140 receives, through the protection circuit 145, a first power signal and a second power signal that are output by the charger 20, to charge the battery 142. The method further includes: The processing circuit 101 sends a third control instruction to the protection circuit 145 in a first time period; and the protection circuit 145 increases a protection threshold of an electrical parameter according to the third control instruction, where the protection threshold is greater than a target charging voltage or a target charging current negotiated by the electronic device 10 and the charger 20. The protection circuit 145 is open when the electrical parameter is greater than the protection threshold.

In this way, the processing circuit may further send the third control instruction to the protection circuit in the first time period, to control the protection circuit to increase the protection threshold of the electrical parameter, and set the protection threshold to be greater than the target charging voltage or the target charging current negotiated by the electronic device and the charger. For example, a protection threshold for overvoltage protection is increased from 150% of the target charging voltage to 180% of the target charging voltage, and a protection threshold for overcurrent is increased from 6 A (target charging current) to 8 A. Therefore, a case in which the protection circuit is triggered to be open because an electrical parameter of a power signal output by the charger is adjusted at a time by n times a minimum adjustment step is avoided.

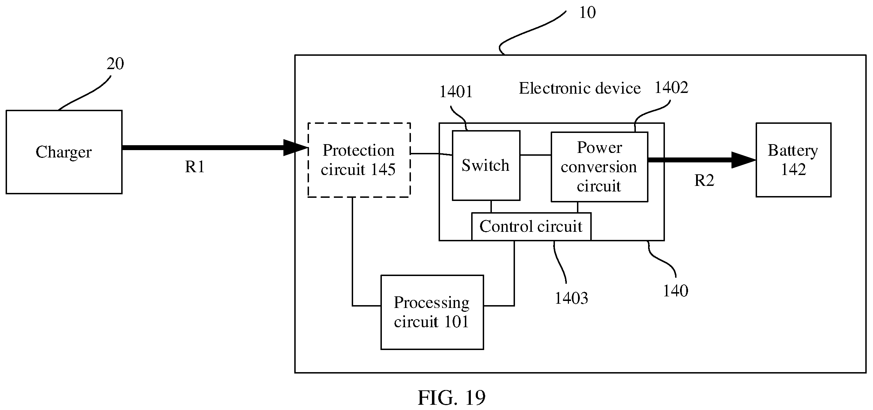

In another example, refer to FIG. 18. To avoid a case in which the protection circuit 145 is triggered to be open when a value of n is large, the processing circuit 101 may send a fourth control instruction to the charging circuit 140 in the first time period. The charging circuit 140 is configured to increase link impedance between the charger 20 and the battery 142 in response to the fourth control instruction. In this way, when an output voltage of the charger is fixed, increasing the link impedance can effectively reduce a charging current, and avoid a case in which the protection circuit is triggered to be open because the current is overcharged and reaches the protection threshold. Specifically, the charging circuit may use an LDO. Refer to FIG. 19. A charging circuit 140 includes a switch 1401 and a power conversion circuit 1402 that are connected in series on a charging link between a protection circuit 145 and a battery 142. The switch 1401 and the power conversion circuit 1402 are further connected to a control circuit 1403. Both the protection circuit 145 and the control circuit 1403 are connected to a processing circuit 101. The charging circuit 140 is coupled to a charger 20. In FIG. 19, the charging circuit 140 is coupled to the charger 20 through the protection circuit 145. Certainly, in some examples, the charging circuit 140 may alternatively be directly coupled to the charger 20. The control circuit 1403 of the charging circuit 140 may control, in response to the fourth control instruction, an on/off state of the switch 1401, for example, control the switch 1401 to be in a fully open state or the LDO mode provided in embodiments of this application. In the LDO mode, the switch 1401 is in a saturation state. In addition, in the LDO mode, the switch 1401 is in a high impedance mode, and impedance of the switch 1401 may be increased from several milliohms to hundreds of milliohms. In addition, the control circuit 1403 may further control the power conversion circuit 1402 to adjust a voltage conversion ratio. The power conversion circuit 1402 may be a direct current-direct current (DC-DC) conversion circuit, and includes but is not limited to the foregoing buck circuit, SC circuit, and the like.

It may be understood that, to implement the foregoing functions, the charger, the electronic device, and the like each include a hardware structure and/or a software module corresponding to each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the charger and the electronic device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

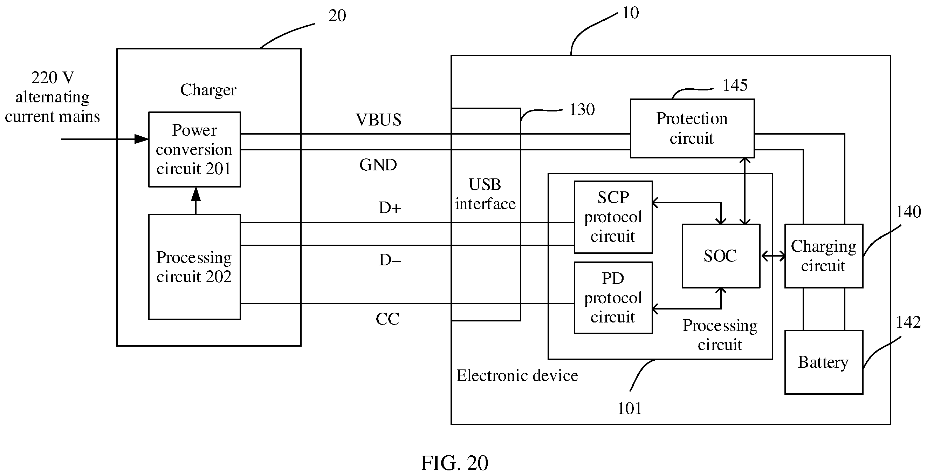

For example, when functional modules are obtained through division in an integrated manner, FIG. 20 is a diagram of a structure of a charging apparatus (an electronic device 10 is used as an example). The charging apparatus may be the electronic device, a chip or a system on chip in the electronic device, or another combined device, component, or the like that can implement a function of the charging apparatus. The charging apparatus may be configured to perform the function of the electronic device in the foregoing embodiment.

In a possible implementation, the electronic device 10 shown in FIG. 20 includes a processing circuit 101 and a charging circuit 140. The processing circuit 101 is configured to perform step S101, and the charging circuit 140 is configured to perform step S103 and step S105.

All related content of the operations in the foregoing method embodiments may be cited in function descriptions of the corresponding functional modules. Details are not described herein again.

In this embodiment, the electronic device is presented in a form of the functional modules obtained through division in the integrated manner. The "module" herein may be an ASIC, a circuit, a processor that executes one or more software or firmware programs, a memory, an integrated logic circuit, and/or another component that can provide the foregoing functions. In a simple embodiment, a person skilled in the art may figure out that the electronic device may be in a form of the electronic device shown in FIG. 2.

For example, the processor 110 in FIG. 2 may invoke computer-executable instructions stored in the memory 121, so that the electronic device performs the charging control method in the foregoing method embodiment.

For example, the processing circuit 101 in FIG. 20 may specifically include the PD protocol circuit, the SCP protocol circuit, the system on chip (system on chip, SOC), and the like shown in the foregoing examples. A function/implementation process of the processing circuit 101 may be implemented by the processor 110 in FIG. 2 by invoking the computer-executable instructions stored in the memory 121. FIG. 20 further shows the charging circuit 140 and a battery 142. The charging circuit 140 and the battery 142 in FIG. 2 may be used as the charging circuit 140 and the battery 142. It may be understood that the electronic device 10 may further include another component. For example, FIG. 20 further shows a protection circuit 145.

The charging apparatus provided in this embodiment may perform the foregoing charging control method. Therefore, for technical effect that can be achieved by the charging apparatus, refer to the foregoing method embodiment. Details are not described herein again.

For example, when functional modules are obtained through division in an integrated manner, FIG. 20 is a diagram of a structure of a charging device (a charger 20 is used as an example). The charging apparatus may be a charger, a chip or a system on chip in the charger, or another combined device, component, or the like that can implement a function of the charging apparatus. The charging apparatus may be configured to perform the function of the charger in the foregoing embodiment.

In a possible implementation, the charger 20 shown in FIG. 20 includes a processing circuit 202 and a power conversion circuit 201. The processing circuit 202 is configured to perform step S101, and the power conversion circuit 201 is configured to perform step S102 and step S104.

With reference to FIG. 3 and a USB interface 130 shown in FIG. 20, to implement transmission of a control instruction and a power signal between the charger 20 and the electronic device 10, the charging circuit 140 is connected to the power conversion circuit 201 through a VBUS pin and a GND pin, to implement transmission of the power signal; and the processing circuit 202 of the charger 20 is connected to the SCP protocol circuit of the electronic device 10 through a D+/D- pin, and the processing circuit 202 of the charger 20 is connected to the PD protocol circuit of the electronic device 10 through a CC pin, to transmission of the control instruction.

All related content of the operations in the foregoing method embodiments may be cited in function descriptions of the corresponding functional modules. Details are not described herein again. The charging apparatus provided in this embodiment may perform the foregoing charging control method. Therefore, for technical effect that can be achieved by the charging apparatus, refer to the foregoing method embodiment. Details are not described herein again.

Optionally, an embodiment of this application further provides a charging apparatus (for example, the charging apparatus may be a chip or a chip system). When the charging apparatus is the chip system, the charging apparatus may include a chip, or may include a chip and another discrete device. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A charging control method, applied to an electronic device, wherein the electronic device and a charger form a charging system, the electronic device comprises a charging circuit, and the method comprises:

    after the electronic device establishes a connection to the charger according to a first charging protocol, receiving, by the charging circuit in a first time period under the first charging protocol, a first power signal output by the charger, wherein the first power signal has a first electrical parameter; and
    receiving, by the charging circuit in a second time period under the first charging protocol, a second power signal output by the charger, wherein the second power signal has a second electrical parameter; and
    the second electrical parameter is greater than the first electrical parameter, the second time period is after the first time period and is adjacent to the first time period, and a difference between the second electrical parameter and the first electrical parameter is n times a minimum adjustment step of an electrical parameter supported by the charger under the first charging protocol, wherein n is a positive integer, and n is greater than or equal to 2.

2. The charging control method according to claim 1, further comprising:

    receiving, by the charging circuit in a third time period under the first charging protocol, a third power signal output by the charger, wherein the third power signal has a third electrical parameter; and
    the third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, wherein m is an integer.

3. The charging control method according to claim 1 or 2, wherein the electronic device further comprises a processing circuit, and the method further comprises:

    sending, by the processing circuit, a first control instruction to the charger in a previous time period of the first time period, wherein the first control instruction comprises the first electrical parameter, or the first control instruction comprises an electrical parameter of a power signal output by the charger in the previous time period of the first time period; and
    the receiving, by the charging circuit in the first time period, a first power signal output by the charger comprises:
    receiving, by the charging circuit in the first time period, the first power signal sent by the charger in response to the first control instruction.

4. The charging control method according to claim 1 or 2, wherein the electronic device further comprises a processing circuit, and the method further comprises:

    sending, by the processing circuit, a second control instruction to the charger in the first time period, wherein the second control instruction comprises the second electrical parameter, or the second control instruction comprises the first electrical parameter; and
    the receiving, by the charging circuit in the second time period, a second power signal output by the charger comprises: receiving, by the charging circuit in the second time period, the second power signal sent by the charger in response to the second control instruction.

5. The charging control method according to claim 4, wherein before the sending, by the processing circuit, a second control instruction to the charger in the first time period, the method further comprises:

    detecting, by the processing circuit, the first power signal to obtain the first electrical parameter, wherein the first electrical parameter comprises a current or a voltage; and
    determining, by the processing circuit, the second electrical parameter based on a difference between the first electrical parameter and a target value, wherein the target value is a target charging voltage or a target charging current negotiated by the electronic device and the charger.

6. The charging control method according to claim 5, wherein the determining, by the processing circuit, the second electrical parameter based on a difference between the first electrical parameter and a target value comprises:

determining, by the processing circuit, an adjustment value based on the difference between the first electrical parameter and the target value and a relationship table, wherein the relationship table comprises a correspondence between the difference and the adjustment value; and

determining, by the processing circuit, the second electrical parameter based on the first electrical parameter and the adjustment value.

7. The charging control method according to claim 5, wherein the determining, by the processing circuit, the second electrical parameter based on a difference between the first electrical parameter and a target value comprises:

rounding, by the processing circuit, a predetermined proportion of the difference between the first electrical parameter and the target value as an adjustment value; and

determining, by the processing circuit, the second electrical parameter based on the first electrical parameter and the adjustment value.

8. The charging control method according to claim 5, wherein the determining, by the processing circuit, the second electrical parameter based on a difference between the first electrical parameter and a target value comprises:

rounding, by the processing circuit, a half of the difference between the first electrical parameter and the target value as an adjustment value; and

determining, by the processing circuit, the second electrical parameter based on the first electrical parameter and the adjustment value.

9. The charging control method according to any one of claims 1 to 8, wherein the electronic device further comprises the processing circuit and a protection circuit, the protection circuit is configured to connect to the charger, the charging circuit is connected between the protection circuit and a battery, and the processing circuit is connected to the protection circuit and the charging circuit; and
the method further comprises:

sending, by the processing circuit, a third control instruction to the protection circuit in the first time period; and

increasing, by the protection circuit, a protection threshold of the electrical parameter according to the third control instruction, wherein the protection threshold is greater than the target charging voltage or the target charging current negotiated by the electronic device and the charger, and the protection circuit is open when the electrical parameter is greater than the protection threshold.

10. The charging control method according to any one of claims 1 to 8, wherein the electronic device further comprises the processing circuit, the charging circuit is coupled to the charger, the charging circuit is further connected to a battery, and the processing circuit is connected to the charging circuit; and
the method further comprises:

sending, by the processing circuit, a fourth control instruction to the charging circuit in the first time period; and

increasing, by the charging circuit, link impedance between the charger and the battery in response to the fourth control instruction.

11. The charging control method according to claim 10, wherein the charging circuit comprises a control circuit, and a switch and a power conversion circuit that are connected in series between the charger and the battery, and the control circuit is connected to the switch, the power conversion circuit, and the processing circuit; and
the control circuit controls, in response to the fourth control instruction, the switch to change to a low dropout regulator LDO mode.

12. A charging control method, applied to a charger, wherein the charger and an electronic device form a charging system, the charger comprises a power conversion circuit, and the method comprises:

after the charger establishes a connection to the electronic device according to a first charging protocol, outputting, by the power conversion circuit, a first power signal to the electronic device in a first time period under the first charging protocol, wherein the first power signal has a first electrical parameter; and outputting, by the power conversion circuit, a second power signal to the electronic device in a second time period under the first charging protocol, wherein the second power signal has a second electrical parameter; and the second electrical parameter is greater than the first electrical parameter, the second time period is after the first time period and is adjacent to the first time period, and a difference between the second electrical parameter and the first electrical parameter is n times a minimum adjustment step supported by the charger under the first charging protocol, wherein n is a positive integer, and n is greater than or equal to 2.

13. The charging control method according to claim 12, wherein the method further comprises:

outputting, by the power conversion circuit, a third power signal to the electronic device in a third time period under the first charging protocol, wherein the third power signal has a third electrical parameter; and the third electrical parameter is greater than the second electrical parameter, the third time period is after the second time period and is adjacent to the second time period, and a difference between the third electrical parameter and the second electrical parameter is m times the minimum adjustment step of the electrical parameter supported by the charger under the first charging protocol, wherein m is an integer.

14. The charging control method according to claim 12 or 13, wherein the charger further comprises a processing circuit, and the method further comprises:

receiving, by the processing circuit in a previous time period of the first time period, a first control instruction sent by the electronic device, wherein the first control instruction comprises the first electrical parameter, or the first control instruction comprises an electrical parameter of a power signal output by the charger in the previous time period of the first time period; and the outputting, by the power conversion circuit, a first power signal to the electronic device in the first time period comprises: sending, by the power conversion circuit, the first power signal to the electronic device in the first time period in response to the first control instruction.

15. The charging control method according to any one of claims 12 to 14, wherein the charger further comprises the processing circuit, and the method further comprises:

receiving, by the processing circuit in the first time period, a second control instruction sent by the electronic device, wherein the second control instruction comprises the second electrical parameter, or the second control instruction comprises the first electrical parameter in the first time period; and the outputting, by the power conversion circuit, a second power signal to the electronic device in the second time period comprises: sending, by the power conversion circuit, the second power signal to the second electronic device in the second time period in response to the second control instruction.

16. The charging control method according to claim 15, wherein after the receiving, by the processing circuit in the first time period, a second control instruction sent by the electronic device, the method further comprises: determining, by the processing circuit, the second electrical parameter based on a difference between the first electrical parameter and a target value.

17. The charging control method according to claim 16, wherein the determining, by the processing circuit, the second electrical parameter based on a difference between the first electrical parameter and a target value comprises:

determining, by the processing circuit, an adjustment value based on the difference between the first electrical parameter and the target value and a relationship table, wherein the relationship table comprises a correspondence between the difference and the adjustment value; and determining, by the processing circuit, the second electrical parameter based on the first electrical parameter and the adjustment value, wherein the target value is a target charging voltage or a target charging current negotiated by the electronic device and the charger.

18. The charging control method according to claim 16, wherein the determining, by the processing circuit, the second electrical parameter based on a difference between the first electrical parameter and a target value comprises:

rounding, by the processing circuit, a predetermined proportion of the difference between the first electrical parameter and the target value as an adjustment value; and

determining, by the processing circuit, the second electrical parameter based on the first electrical parameter and the adjustment value.

19. The charging control method according to claim 16, wherein the determining, by the processing circuit, the second electrical parameter based on a difference between the first electrical parameter and a target value comprises:

rounding, by the processing circuit, a half of the difference between the first electrical parameter and the target value as an adjustment value; and

determining, by the processing circuit, the second electrical parameter based on the first electrical parameter and the adjustment value.

20. A charging apparatus, used in an electronic device, and configured to perform the charging control method according to any one of claims 1 to 11.

21. A charging apparatus, used in a charger, and configured to perform the charging control method according to any one of claims 12 to 19.

22. A chip, comprising the charging apparatus according to claim 20 or 21.

23. A charging system, comprising an electronic device and a charger, wherein the electronic device comprises the charging apparatus according to claim 20.

24. A charging system, comprising an electronic device and a charger, wherein the charger comprises the charging apparatus according to claim 21.

FIG. 1

10

Antenna 1                                    Antenna 2

| Mobile communication module 2G/3G/4G/5G [150] | Wireless communication module BT/WLAN/NFC/IR/FM [160] |

| Speaker [170A] | | |
| Receiver [170B] | Audio module [170] | Processor [110] |
| Microphone [170C] | | |
| Headset jack [170D] | | |

Sensor [180]

Pressure sensor

Gyroscope sensor

Barometric pressure sensor

Displays 1 to N [194]

Cameras 1 to N [193]

Memory [121]

Indicator [192]

SIM card interfaces 1 to N [195]

Motor [191]

Button [190]

External memory interface [120]

USB interface [130]

Charging circuit [140]

Power management module [141]

Charging input

Battery [142]

FIG. 2

VBUS   CC   D+   D–   SBU1   VBUS

A | 1 | 2 | 3 | 4 | 5 | 6 | 7 | 8 | 9 | 10 | 11 | 12 | A

B | 12 | 11 | 10 | 9 | 8 | 7 | 6 | 5 | 4 | 3 | 2 | 1 | B

VBUS   SBU2   D+   D–   CC   VBUS

## FIG. 3

Electronic device 10

## FIG. 4

## FIG. 5

FIG. 6

FIG. 7

Charger ——————————— Electronic device

S101: The electronic device establishes a connection to the charger according to a first charging protocol

First control instruction

S102/S103: First power signal

Second control instruction

S104/S105: Second power signal

⋮

FIG. 8

20  Vo  V2  10

Charger → Charging circuit → Battery

R1  R2

Electronic device

V3  Vbat

140  142

FIG. 9

Voltage/V      Example 1   V2:V3=1:1

—— Charging voltage Vo

FIG. 10

Voltage/V      Example 2   V2:V3=2:1

—— Charging voltage Vo

FIG. 11

Voltage/V          Example 3     V2:V3=1:1

                        Charging voltage Vo

FIG. 12

Voltage/V          Example 4   V2:V3=2:1

                        Charging voltage Vo

FIG. 13

Voltage/V          Example 5    V2:V3=1:1

— Charging voltage Vo

FIG. 14

Voltage/V                Example 6      V2:V3=2:1

— Charging voltage Vo

FIG. 15

FIG. 16

FIG. 17

10

20

Vo        V2

Charger          Electronic device        Vbat

R1

Protection
circuit 145

Charging
circuit 140

Battery 142

R2

V3

Processing
circuit 101

FIG. 18

FIG. 19

FIG. 20

EP 4 632 996 A1

## INTERNATIONAL SEARCH REPORT

| International application No. |
| --- |
| **PCT/CN2024/076725** |

| | |
| --- | --- |
| A. | CLASSIFICATION OF SUBJECT MATTER |

H02J7/00(2006.01)i

According to International Patent Classification (IPC) or to both national classification and IPC

| | |
| --- | --- |
| B. | FIELDS SEARCHED |

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT, WPABS, ENTXT, ENTXTC, DWPI, CNKI: 充电, 速度, 快充, 闪充, 电流, 电压, 功率, 爬升, 上升, 提升, 升高, 提高, 增加, 调整, 调节, 阶梯, 步长, 幅度, 差, charge, speed, fast, quick, rapid, flash, current, voltage, power, climb, rise, boost, advance, increase, adjust, regulate, step, length, size, width, amplitude, difference

| | |
| --- | --- |
| C. | DOCUMENTS CONSIDERED TO BE RELEVANT |

| Category* | Citation of document, with indication, where appropriate, of the relevant passages | Relevant to claim No. |
| --- | --- | --- |
| X | CN 111049234 A (SHENZHEN KINJI TECHNOLOGY CO., LTD.) 21 April 2020 (2020-04-21) <br> description, paragraphs 2-63, and figures 1-6 | 1-24 |
| X | CN 109742824 A (HUAWEI TECHNOLOGIES CO., LTD.) 10 May 2019 (2019-05-10) <br> description, paragraphs 2-54, and figures 1-6 | 1-24 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 April 2024** | **06 May 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076725**

| Patent document cited in search report | | | Publication date (day/month/year) | Patent family member(s) | Publication date (day/month/year) |
|---|---|---|---|---|---|
| CN | 111049234 | A | 21 April 2020 | None | |
| CN | 109742824 | A | 10 May 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310424880